# EUROPÄISCHE PATENTSCHRIFT

(11) **EP 4 150 752 B1**
(45) Veröffentlichungstag und Bekanntmachung des Hinweises auf die Patenterteilung: **30.09.2026**
(21) Anmeldenummer: 20746914.9
(22) Anmeldetag: 17.07.2020
(51) Int. Cl.: H02M 7/483, H02M 1/00

(54) **REGELUNG FÜR EINEN MULTILEVELSTROMRICHTER**
CONTROL FOR A MULTILEVEL CONVERTER
CONTRÔLE POUR UN CONVERTISSEUR À PLUSIEURS NIVEAUX

(43) Veröffentlichungstag der Anmeldung: 22.03.2023
(73) Patentinhaber: Siemens Energy Global GmbH & Co. KG, 81739 München (DE)
(72) Erfinder: SCHUSTER, Dominik, 91456 Diespeck (DE); GAFUR, Ilhom, 90419 Nürnberg (DE)
(86) Internationale Anmeldenummer: PCT/EP2020/070325
(87) Internationale Veröffentlichungsnummer: WO 2022/012759

(56) Entgegenhaltungen:
- EP-A2- 2 958 225
- DE-A1- 102011 076 199
- JP-A- 2018 137 858
- US-A1- 2015 016 828
- US-A1- 2017 054 294
- US-A1- 2020 212 818

## Beschreibung

Die Erfindung betrifft ein Verfahren zum Regeln eines modularen Multilevelstromrichters sowie eine Anordnung mit einem modularen Multilevelstromrichter.

Modulare Multilevelstromrichter weisen mindestens einen Phasenmodulzweig auf, wobei der Phasenmodulzweig eine Reihenschaltung von zweipoligen Modulen aufweist. Solche Module werden auch als Submodule bezeichnet. Jedes diese Module weist einen Energiespeicher und eine Leistungshalbleiterschaltung mit elektronischen Schaltelementen auf. Beim Betrieb des Multilevelstromrichters sind die Energiespeicher der einzelnen Module jeweils auf eine bestimmte Spannung aufgeladen. Durch eine entsprechende Ansteuerung der elektronischen Schaltelemente der einzelnen Module kann die Spannung des Energiespeichers auf Modulanschlüsse durchgeschaltet werden, wodurch dann diese Module zu der von dem Multilevelstromrichter bereitgestellten (Gesamt-)Spannung beitragen. Module, die zu der von dem Multilevelstromrichter bereitgestellten Spannung beitragen, werden auch als "eingeschaltete Module" bezeichnet.

Beim Betrieb des Multilevelstromrichters ist es vorstellbar, den Multilevelstromrichter so zu regeln, dass die in einem Phasenmodulzweig gespeicherte Energie stets konstant ist (Energieregelung). Die Energie des Phasenmodulzweigs wird dann also von einem entsprechenden Regler (Energie-Regler) über alle denkbaren Arbeitspunkte hinweg auf einem konstanten Sollwert gehalten. Dieser Sollwert (Energiesollwert) könnte dann so dimensioniert sein, dass auch im ungünstigsten vorstellbaren Arbeitspunkt (worst-case-Arbeitspunkt) noch ein sicherer, kontrollierbarer Betrieb des Multilevelstromrichters möglich ist. Das heißt, dass auch in diesem ungünstigsten Arbeitspunkt der Phasenmodulzweig auf eine ausreichend große Energie aufgeladen ist. Eine solche Vorgehensweise hat allerdings den Nachteil, dass bei vielen anderen Arbeitspunkten die in dem Phasenmodulzweig gespeicherte Energie größer ist, als sie für diese anderen Arbeitspunkte sein müsste. Mit anderen Worten gesagt, sind bei diesen anderen Arbeitspunkten die Energiespeicher der einzelnen Module auf eine zu hohe Spannung aufgeladen. Dies wiederum bringt eine Reihe von Nachteilen mit sich: Es werden dadurch unnötig hohe elektrische Verluste im Stromrichter erzeugt, da die Schaltverluste der Module mit größer werdender Spannung des Energiespeichers ebenfalls größer werden. Außerdem werden die Bauelemente der Module mit einer unnötig hohen Spannung belastet, wodurch ihre Lebensdauer verkürzt wird.

Aus der europäischen Patentanmeldung EP 2 958 225 A2 ist ein Verfahren zum Betreiben eines einen Spannungszwischenkreis aufweisenden modularen Mehrstufenstromrichters bekannt, der mehrere Stromrichtermodule aufweist. Zur Vergrößerung der Aussteuerreserve wird einem Stromrichtermodul eine Nullsystemspannung aufgeschaltet, die eine Spannungsverschiebung zwischen Nullpunkten des Mehrstufenstromrichters auf der Wechselspannungsseite und der Gleichspannungsseite erzeugt.

Die Patentanmeldung US 2017/054294 A1 offenbart einen modularen Multilevelstromrichter, dessen Submodule jeweils einen Kondensator aufweisen. Eine Regelung des Stromrichters umfasst einen Regelkreis mit einem Differenzialmodus-Regelkreis und einen Gleichtakt-Regelkreis. Der Differenzialmodus-Regelkreis ist so konfiguriert, dass er ein Differenzialsteuersignal auf der Grundlage eines Zielmodulationsindex erzeugt, um die Grundschwingung der Spannungswelligkeit an den Kondensatoren zu reduzieren. Der Gleichtakt-Regelkreis ist so konfiguriert, dass er einen harmonischen Strom zweiter Ordnung in ein Gleichtaktsteuersignal einspeist, um harmonische Komponenten zweiter Ordnung der Spannungswelligkeit an den Kondensatoren zu reduzieren.

Die Offenlegungsschrift DE 10 2011 076 199 A1 offenbart eine Stromrichtereinheit mit mehreren identischen Modulen, wodurch besonders einfach vorteilhafte Redundanzeigenschaften für den Fehlerfall erreicht werden können.

Die Schrift US 2020/212818 A1 offenbart eine Antriebseinheit zum Betrieb eines dreiphasigen Wechselstrommotors. Diese Antriebseinheit weist einen Gleichrichter mit einem Glättungskondensator und einen Wechselrichter auf.

Dabei wird ein Tastverhältnis von Schaltventilen des Wechselrichters berechnet, das periodisch zwischen einem unteren Wert und einem oberen Wert schwankt.

Aus der Schrift JP 2018 137858 A sind Maximalwertbilder bekannt.

Der Erfindung liegt die Aufgabe zugrunde, ein Verfahren zum Regeln eines modularen Multilevelstromrichters sowie eine Anordnung mit einem modularen Multilevelstromrichter anzugeben, bei denen vergleichsweise geringe elektrische Verluste auftreten und die Lebensdauer der Module vergleichsweise hoch ist.

Diese Aufgabe wird erfindungsgemäß gelöst durch ein Verfahren und durch eine Anordnung gemäß den unabhängigen Patentansprüchen. Vorteilhafte Ausgestaltungen des Verfahrens und der Anordnung sind in den abhängigen Patentansprüchen angegeben.

Offenbart wird ein Verfahren zum Regeln eines modularen Multilevelstromrichters, der mindestens einen Phasenmodulzweig aufweist, welcher eine Reihenschaltung von (zweipoligen) Modulen aufweist, wobei diese Module jeweils einen Energiespeicher und eine (zu dem Energiespeicher parallel geschaltete) Leistungshalbleiterschaltung mit elektronischen Schaltelementen aufweisen, wobei bei dem Verfahren
- ein Aussteuergrad des Phasenmodulzweigs ermittelt wird, wobei der Aussteuergrad das Verhältnis zwischen der (aktuell) von dem Phasenmodulzweig ausgegebenen (bzw. bereitgestellten) Phasenmodulzweigspannung und der (aktuell) maximal ausgebbaren (bzw. bereitstellbaren) Phasenmodulzweigspannung beschreibt,
- wobei ein Programm-Code die Funktionsweise eines Maximalwertbilders, aufweisend einen Kondensator, der über eine Diode durch ein Signal des Aussteuergrads auf einen Maximalwert des Aussteuergrads aufgeladen wird, welcher durch eine Entladung des Kondensators über einen Widerstand des Maximalwertbilders mit der Zeit linear abfällt, zeitdiskret digital nachbildet, um den Maximalwert des Aussteuergrads während einer vorgewählten Zeitspanne zu ermitteln, wobei der Programm-Code eine zeitdiskrete Folge des Aussteuergrads auswertet, indem der Aussteuergrad a(k) zu einem Zeitpunkt (gekennzeichnet durch "k" als Index der zweitdiskreten Werte) der Folge mit dem Maximalwert des Aussteuergrads amax(k-1) zum vorherigen Zeitpunkt vergleicht und den aktuellen Wert für den Maximalwert amax(k) des Aussteuergrads mit dem aktuellen Aussteuergrad a(k) gleichsetzt, wenn der aktuelle Aussteuergrad a(k) größer ist als der Maximalwert des Aussteuergrads amax(k-1) zum vorherigen Zeitpunkt, und den aktuellen Wert für den Maximalwert amax(k) des Aussteuergrads auf einen niedrigeren Wert absenkt, wenn der aktuelle Aussteuergrad a(k) nicht größer ist als der Maximalwert des Aussteuergrads amax(k-1) zum vorherigen Zeitpunkt, wobei der niedrigere Wert als Differenz des Maximalwerts des Aussteuergrads amax(k-1) zum vorherigen Zeitpunkt und einem falloff-Wert gebildet wird, der die Entladung des Kondensators des Maximalwertbilders über den Widerstand des Maximalwertbilders simuliert, und
- mittels einer Regeleinrichtung der Maximalwert des Aussteuergrads auf einen Sollwert für den Maximalwert des Aussteuergrads geregelt wird.

Der modulare Multilevelstromrichter kann mit einem Wechselspannungsnetz verbindbar sein und die vorgewählte Zeitspanne einer Periode der Frequenz des Wechselspannungsnetzes entsprechen.

Hierbei ist vorteilhaft, dass der Maximalwert des Aussteuergrads des Phasenmodulzweigs ermittelt und dieser Maximalwert des Aussteuergrads auf einen Sollwert geregelt wird. Dadurch wird erreicht, dass die Energiespeicher der Module des Phasenmodulzweigs im Mittel nur auf die Spannung aufgeladen sind, die dem jeweiligen Sollwert entspricht. Damit wird erreicht, dass der Maximalwert des Aussteuergrads während der vorgewählten Zeitspanne, insbesondere in jeder Periode der Frequenz des Wechselspannungsnetzes, im Wesentlichen den Sollwert erreicht. Ein solcher Sollwert für den Maximalwert des Aussteuergrads kann beispielsweise bei 85% liegen, es sind aber natürlich auch andere Sollwerte möglich. Mit anderen Worten wird durch die Regelung erreicht, dass in den Modulen des Phasenmodulzweigs jeweils nur so viel Energie gespeichert ist (beziehungsweise die Energiespeicher des Phasenmodulzweigs nur auf so hohe Spannungen aufgeladen sind), dass zum Zeitpunkt des Maximalwerts des Aussteuergrads gerade der Sollwert für den Maximalwert des Aussteuergrads erreicht wird. Der Maximalwert des Aussteuergrads liegt dabei typischerweise zu einem Zeitpunkt während der Periode der Frequenz des Wechselspannungsnetzes vor. Es wird also erreicht, dass der Multilevelstromrichter mit der geringstmöglichen Spannung betrieben wird, die notwendig ist, damit der Maximalwert des Aussteuergrads den Sollwert erreicht.

Vorteilhafterweise wird also gerade keine Energie des Phasenmodulzweigs geregelt (wie bei der eingangs erwähnten Energieregelung) und die oben genannten Nachteile werden dadurch vermieden. Es wird auch keine Spannung des Phasenmodulzweigs geregelt. Vielmehr wird der Maximalwert des Aussteuergrads, insbesondere innerhalb einer Periode der Frequenz des Wechselspannungsnetzes, auf den Sollwert eingeregelt.

Das Verfahren kann so ablaufen, dass
- der Aussteuergrad ermittelt wird
   - durch Ermitteln (zum Beispiel Messen oder Verwenden eines Spannungs-Sollwerts) der von dem Phasenmodulzweig ausgegebenen Phasenmodulzweigspannung und der Spannungen der Energiespeicher der einzelnen Module des Phasenmodulzweigs, durch Summation der Spannungen der Energiespei-
   cher der einzelnen Module des Phasenmodulzweigs und anschließende Verhältnisbildung zwischen der Phasenmodulzweigspannung und der Summe der Spannungen der Energiespeicher der Module des Phasenmodulzweigs, oder
- durch Ermitteln derjenigen Anzahl der Module des Phasenmodulzweigs, bei denen die Spannung des jeweiligen Energiespeichers wirksam zur Phasenmodulzweigspannung beiträgt, und anschließende Verhältnisbildung zwischen der bestimmten Anzahl der Module und der Gesamtzahl der in dem Phasenmodulzweig vorhandenen Module.

Vorteilhafterweise werden bei der Gesamtzahl insbesondere nur die intakten Module des Phasenmodulzweigs berücksichtigt.

Die Module des Phasenmodulzweigs, bei denen die Spannung des jeweiligen Energiespeichers wirksam zur Phasenmodulzweigspannung beiträgt, sind diejenigen Module, bei denen mittels der elektronischen Schaltelemente die Spannung des jeweiligen Energiespeichers auf die beiden Modulanschlüsse (die beiden Pole der zweipoligen Module) geschaltet ist. Diese Module werden auch als "eingeschaltete Module" bezeichnet.

Vorteilhafterweise kann also der Aussteuergrad auf zwei verschiedene Arten ermittelt werden. Zum einen können die von dem Phasenmodulzweig ausgegebene Phasenmodulzweigspannung sowie die Spannungen der Energiespeicher der einzelnen Module des Phasenmodulzweigs ausgewertet werden und daraus der Aussteuergrad ermittelt werden. Zum anderen ist es jedoch auch möglich, lediglich die Anzahl der Module des Phasenmodulzweigs, deren Spannung zur Phasenmodulzweigspannung beiträgt (d.h., die Anzahl der eingeschalteten Module), ins Verhältnis zu setzen zur Gesamtanzahl der in dem Phasenmodulzweig vorhandenen (intakten) Module. Diese Anzahlen sind beim Betrieb des Multilevelstromrichters in der Regel sowieso bekannt. Für die zweite Variante ist vorteilhafterweise keine Auswertung der Spannungen der Energiespeicher der einzelnen Module notwendig.

Das Verfahren kann auch so ablaufen, dass
- der Maximalwert des Aussteuergrads auf den Sollwert für den Maximalwert des Aussteuergrads geregelt wird, indem bei zu hohem Maximalwert des Aussteuergrads die elektronischen Schaltelemente der Module des Phasenmodulzweigs derart angesteuert werden, dass die Energiespeicher der Module im Mittel auf eine höhere Spannung aufgeladen werden, wodurch der Maximalwert des Aussteuergrads sinkt, und/oder indem bei zu niedrigem Maximalwert des Aussteuergrads die elektronischen Schaltelemente der Module des Phasenmodulzweigs derart angesteuert werden, dass die Energiespeicher der Module im Mittel auf eine niedrigere Spannung aufgeladen werden, wodurch der Maximalwert des Aussteuergrads steigt.

Wenn die Energiespeicher der Module im Mittel auf eine höhere Spannung aufgeladen werden, dann kann der Phasenmodulzweig eine größere Spannung bereitstellen, so dass der Aussteuergrad und damit auch der Maximalwert des Aussteuergrads sinkt. Umgekehrt gilt auch Folgendes: Wenn die elektronischen Schaltelemente der Module des Phasenmodulzweigs so angesteuert werden, dass die Energiespeicher der Module im Mittel auf eine niedrigere Spannung aufgeladen werden, dann kann der Phasenmodulzweig nur eine niedrigere Spannung bereitstellen, wodurch der Aussteuergrad und damit auch der Maximalwert des Aussteuergrads steigt.

Das Verfahren kann auch so ablaufen, dass
- der Maximalwert des Aussteuergrads auf den Sollwert für den Maximalwert des Aussteuergrads geregelt wird, indem
   - der Sollwert für den Maximalwert des Aussteuergrads in eine Sollenergiemenge der Module des Phasenmodulzweigs oder in eine Sollsumme der Spannungen der Energiespeicher der Module des Phasenmodulzweigs umgerechnet wird, und
   - die elektronischen Schaltelemente der Module derart angesteuert werden, dass der Phasenmodulzweig auf die Sollenergiemenge oder die Sollsumme der Spannungen der Energiespeicher der Module aufgeladen oder entladen wird.

Diese Variante des Verfahrens ist insbesondere dann vorteilhaft, wenn ein Multilevelstromrichter bisher dadurch geregelt wurde, dass die Sollenergiemenge der Module des Phasenmodulzweigs oder die Sollsumme der Spannungen der Energiespeicher der Module des Phasenmodulzweigs jeweils auf einen Sollwert geregelt worden sind (also beispielsweise auf einen konstanten Sollwert geregelt worden sind). Ein derartiger Multilevelstromrichter kann dann besonders einfach auf das hier offenbarte Verfahren aufgerüstet werden, indem dem sowieso schon vorhandenen Energie(mengen)regler bzw. Spannungs-(summen)regler ein Aussteuergradregler übergeordnet wird. Der Aussteuergradregler gibt dann die Sollenergiemenge bzw. die Sollsumme der Spannungen jeweils so vor, dass der Maximalwert des Aussteuergrads auf den Sollwert geregelt wird. Dadurch lassen sich insbesondere die Verluste des bisher energiegeregelten bzw. spannungsgeregelten Multilevelstromrichters senken und die Lebensdauer der Module verlängern.

Das Verfahren kann auch so ablaufen, dass
- ein konstanter Sollwert für den Maximalwert des Aussteuergrads verwendet wird oder ein Sollwert für den Maximalwert des Aussteuergrads verwendet wird, der abhängig ist von einem aus der Phasenmodulzweigspannung und einem Phasenmodulzweigstrom gebildeten Arbeitspunkt des Phasenmodulzweigs. Dabei kann der Sollwert beispielsweise aus einem Kennfeld ausgelesen oder rechnerisch ermittelt werden. Der Betrieb mit einem konstanten Sollwert ist besonders einfach, wohingegen mit einem arbeitspunktspezifischen Sollwert eine noch weitergehende Verlustreduzierung bzw. Lebensdauerverlängerung möglich ist.

Das Verfahren kann auch so ablaufen, dass
- der Phasenmodulzweig überzählige Module aufweist, die zum Ersetzen von während des Betriebs des Multilevelstromrichters ausfallenden Modulen bestimmt sind, und diese überzähligen Module beim Betrieb des Multilevelstromrichters auch (stets) in Betrieb sind (und nicht etwa beispielsweise überbrückt sind). Dadurch sinkt die mittlere Spannung der Energiespeicher der Module des Phasenmodulzweigs. Dies gilt insbesondere nur solange, wie die überzähligen Module nicht aufgebraucht sind, weil entsprechend viele Module des Phasenmodulzweigs bereits ausgefallen sind.

Dabei werden die überzähligen Module (die auch als Redundanzmodule bezeichnet werden) vorteilhafterweise stets beim Betrieb des Multilevelstromrichters ebenfalls in Betrieb genommen. Dadurch verteilt sich die insgesamt in einem Phasenmodulzweig gespeicherte Spannung auf eine größere Anzahl an Modulen, wodurch im Mittel die Spannung pro Modul geringer ist. Auch dadurch werden die elektrischen Verluste gesenkt und/oder die Lebensdauer der Module verlängert.

Das Verfahren kann auch so ablaufen, dass
- für mehrere (insbesondere alle) Phasenmodulzweige des Multilevelstromrichters ein gemeinsamer Maximalwert des Aussteuergrads während der vorgewählten Zeitspanne ermittelt wird, und
- mittels der Regeleinrichtung der gemeinsame Maximalwert des Aussteuergrads auf einen Sollwert für den gemeinsamen Maximalwert des Aussteuergrads geregelt wird.

Als gemeinsamer Maximalwert des Aussteuergrads kann dabei insbesondere der höchste Maximalwert der Maximalwerte der jeweiligen Phasenmodulzweige verwendet werden. Dieses Regelungsverfahren ist besonders einfach umsetzbar, weil nur ein Wert (der gemeinsame Maximalwert des Aussteuergrads) auf einen Sollwert geregelt zu werden braucht. Die erreichbare Spannungsabsenkung (und damit Verlustreduzierung bzw. Lebensdauerverlängerung) ist bei dieser Variante des Verfahrens zwar etwas geringer, als wenn für jeden Phasenmodulzweig ein eigener Maximalwert auf einen eigenen Sollwert geregelt werden würde. Aber auch mit dieser Variante lässt sich eine signifikante Verlustleistungsreduzierung bzw. Lebensdauerverlängerung erreichen.

Das Verfahren kann auch so ausgestaltet sein, dass
- ein Sollwert für den Maximalwert des Aussteuergrads verwendet wird, der um einen vorgewählten Sicherheitsabstand kleiner ist als der Wert 1. Der Wert 1 entspricht 100%. Dieser Sicherheitsabstand stellt sicher, dass der modulare Multilevelstromrichter kontrollierbar/regelbar bleibt, d.h. dass die von dem modulare Multilevelstromrichter erzeugte Spannung bei Bedarf sowohl erhöht als auch gesenkt werden kann.

Offenbart wird weiterhin eine Anordnung mit einem modularen Multilevelstromrichter, der mindestens einen Phasenmodulzweig aufweist, welcher eine Reihenschaltung von (zweipoligen) Modulen aufweist, wobei diese Module jeweils einen Energiespeicher und eine (zu dem Energiespeicher parallel geschaltete) Leistungshalbleiterschaltung mit elektronischen Schaltelementen aufweisen,
- mit einer Ermittlungseinrichtung, die einen Aussteuergrad des Phasenmodulzweigs ermittelt, wobei der Aussteuergrad das Verhältnis zwischen der (aktuell) von dem Phasenmodulzweig ausgegebenen (bzw. bereitgestellten) Phasenmodulzweigspannung und der (aktuell) maximal ausgebbaren (bzw. bereitstellbaren) Phasenmodulzweigspannung beschreibt,
- mit einem Mittel, welches dazu ausgebildet ist, die Funktionsweise eines Maximalwertbilders, aufweisend einen Kondensator, der über eine Diode durch ein Signal des Aussteuergrads auf einen Maximalwert des Aussteuergrads aufgeladen wird, welcher durch eine Entladung des Kondensators über einen Widerstand des Maximalwertbilders mit der Zeit linear abfällt, zeitdiskret digital nachzubilden, um den Maximalwert des Aussteuergrads während einer vorgewählten Zeitspanne zu ermitteln, und
- mit einer Regeleinrichtung, die ausgestaltet ist zum Regeln des Maximalwerts des Aussteuergrads auf einen Sollwert für den Maximalwert des Aussteuergrads, wobei die Anordnung ausgestaltet ist, das erfindungsgemäße Verfahren auszuführen. Die Regeleinrichtung regelt also den Maximalwert des Aussteuergrads auf den Sollwert für den Maximalwert des Aussteuergrads.

Der modulare Multilevelstromrichter kann mit einem Wechselspannungsnetz verbindbar sein und die vorgewählte Zeitspanne einer Periode der Frequenz des Wechselspannungsnetzes entsprechen.

Die Anordnung kann so realisiert sein, dass
die Ermittlungseinrichtung ausgestaltet ist
- zum Bestimmen (beispielsweise Messen oder Verwenden eines Sollwerts) der von dem Phasenmodulzweig ausgegebenen Phasenmodulzweigspannung und der Spannungen der Energiespeicher der einzelnen Module des Phasenmodulzweigs, zur Summation der Spannungen der Energiespeicher der einzelnen Module des Phasenmodulzweigs und zur anschließenden Verhältnisbildung zwischen der Phasenmodulzweigspannung und der Summe der Spannungen der Energiespeicher der Module des Phasenmodulzweigs, oder
- zum Bestimmen derjenigen Anzahl der Module des Phasenmodulzweigs, bei denen die Spannung des jeweiligen Energiespeichers wirksam zur Phasenmodulzweigspannung beiträgt, und zur anschließenden Verhältnisbildung zwischen der bestimmten Anzahl der Module und der Gesamtzahl der in dem Phasenmodulzweig vorhandenen Module. Dabei kann die Gesamtzahl vorzugsweise die Gesamtzahl der in dem Phasenmodulzweig vorhandenen intakten Module einschließlich gegebenenfalls vorhandener Redundanzmodule sein.

Die Anordnung kann auch so ausgestaltet sein, dass
- die Regeleinrichtung den Maximalwert des Aussteuergrads auf den Sollwert für den Maximalwert des Aussteuergrads regelt, indem bei zu hohem Maximalwert des Aussteuergrads die Regeleinrichtung eine Ansteuerung der elektronischen Schaltelemente der Module des Phasenmodulzweigs veranlasst derart, dass die Energiespeicher der Module im Mittel auf eine höhere Spannung aufgeladen werden, wodurch der Maximalwert des Aussteuergrads sinkt, und/oder indem bei zu niedrigem Maximalwert des Aussteuergrads die Regeleinrichtung eine Ansteuerung der elektronischen Schaltelemente der Module des Phasenmodulzweigs veranlasst derart, dass die Energiespeicher der Module im Mittel auf eine niedrigere Spannung aufgeladen werden, wodurch der Maximalwert des Aussteuergrads steigt.

Die Anordnung kann so ausgestaltet sein, dass die Regeleinrichtung den Maximalwert des Aussteuergrads auf den Sollwert für den Maximalwert des Aussteuergrads regelt,
- indem die Regeleinrichtung den Sollwert für den Maximalwert des Aussteuergrads in eine Sollenergiemenge der Module des Phasenmodulzweigs oder eine Sollsumme der Spannungen der Energiespeicher der Module des Phasenmodulzweigs umgerechnet, und
- indem die Regeleinrichtung eine Ansteuerung der elektronischen Schaltelemente der Module veranlasst derart, dass der Phasenmodulzweig auf die Sollenergiemenge oder die Sollsumme der Spannungen der Energiespeicher der Module aufgeladen oder entladen wird.

Die Anordnung kann auch so ausgestaltet sein, dass
- die Regeleinrichtung einen konstanten Sollwert für den Maximalwert des Aussteuergrads verwendet oder einen Sollwert für den Maximalwert des Aussteuergrads verwendet, der abhängig ist von einem aus der Phasenmodulzweigspannung und einem Phasenmodulzweigstrom gebildeten Arbeitspunkt des Phasenmodulzweigs. Dabei kann der Sollwert insbesondere aus einem Kennfeld ausgelesen oder rechnerisch ermittelt sein.

Die Anordnung kann so ausgestaltet sein, dass
- der Phasenmodulzweig überzählige Module (sogenannte Redundanz-Module) aufweist, die zum Ersetzen von während des Betriebs des Multilevelstromrichters ausfallenden Modulen bestimmt sind, und diese überzähligen Module beim Betrieb des Multilevelstromrichters auch (stets) in Betrieb sind. Dadurch sinkt die mittlere Spannung der Energiespeicher der Module des Phasenmodulzweigs.

Die Anordnung kann auch so ausgestaltet sein, dass
- der Maximalwertbilder für mehrere (insbesondere alle) Phasenmodulzweige des Multilevelstromrichters einen gemeinsamen Maximalwert des Aussteuergrads während der vorgewählten Zeitspanne ermittelt, und
- die Regeleinrichtung den gemeinsamen Maximalwert des Aussteuergrads auf einen Sollwert für den gemeinsamen Maximalwert des Aussteuergrads regelt.

Der gemeinsame Maximalwert des Aussteuergrads kann dabei insbesondere der höchste Maximalwert des Aussteuergrads der jeweiligen Phasenmodulzweige sein.

Die Anordnung kann so ausgestaltet sein, dass
- der Sollwert für den Maximalwert des Aussteuergrads um einen vorgewählten Sicherheitsabstand kleiner ist als 1. Dieser Sicherheitsabstand ermöglicht die Kontrollierbarkeit des modularen Multilevelstromrichters.

Die Anordnung kann auch so ausgestaltet sein, dass
- die Module jeweils ein erstes elektronisches Schaltelement, ein zweites elektronisches Schaltelement und den Energiespeicher aufweisen, wobei das erste elektronische Schaltelement, das zweite elektronische Schaltelement und der Energiespeicher in einer Halbbrückenschaltung angeordnet sind, oder
- die Module jeweils ein erstes elektronisches Schaltelement, ein zweites elektronisches Schaltelement, ein drittes elektronisches Schaltelement, ein viertes elektronisches Schaltelement und den Energiespeicher aufweisen, wobei das erste elektronische Schaltelement, das zweite elektronische Schaltelement, das dritte elektronische Schaltelement, das vierte elektronische Schaltelement und der Energiespeicher in einer Vollbrückenschaltung angeordnet sind.

Das beschriebene Verfahren und die beschriebene Anordnung weisen gleiche bzw. gleichartige Vorteile auf.

Das Verfahren und die Anordnung betreffen die Regelung von modularen Multilevelstromrichtern bei deren Betrieb. Sie können für modulare Multilevelstromrichter in verschiedensten Topologien angewendet werden, zum Beispiel für modulare Multilevelstromrichter in 6-Puls Schaltung oder in Delta-Schaltung (Dreiecks-Schaltung). Die folgende Beschreibung erfolgt weitgehend anhand eines Phasenmodulzweigs eines modularen Multilevelstromrichters. Bei einem solchen Phasenmodulzweig ist eine (Viel-)Zahl von Modulen in Reihe geschaltet. Die Module können unterschiedlich aufgebaut sein, beispielsweise als Halbbrückenmodul oder als Vollbrückenmodul. Ein Phasenmodulzweig wird auch als Konvertermodul bezeichnet.

Im quasistationären Zustand ergibt sich für jeden Arbeitspunkt des Stromrichters ein anderer Verlauf der vom Phasenmodulzweig zu stellenden Spannung U_{conv}(t). Dieser ist gegeben durch äußere Größen des Stromrichters: Ströme, Spannungen, geforderte (Blind-)Leistung, Beschaltungskomponenten (z.B. Drosseln und Transformatoren) und/oder die Topologie des Konverters.

Aus diesen Größen ergibt sich ein (für jeden Arbeitspunkt individueller) Phasenmodulzweigstromverlauf I_{conv}(t) und aus dem Produkt U_{conv}(t) x I_{conv}(t) der Leistungsverlauf bzw. Energieumsatz des Phasenmodulzweigs. Zusammen mit der Dimensionierung des Phasenmodulzweigs (Anzahl der Module, Kondensatorgröße der Module, Betriebsspannung der Module) folgt daraus der Verlauf der vom Phasenmodulzweig stellbaren Spannung. Sie ist die Spannung, die das Phasenmodulzweig in einem Augenblick stellen könnte, wenn alle Module gleichzeitig eingeschaltet wären - also die Summe aller Modulspannungen, folgend ∑U_{SM}(t).

Eine grundlegende Anforderung an den Betrieb, Regelung und die Dimensionierung des Phasenmodulzweigs ist bei allen modularen Multilevelstromrichtern: Die Summenspannung ΣU_{SM}(t) aller verfügbaren Module muss zu jedem Zeitpunkt mindestens so groß sein, wie die Spannung U_{conv}(t), die das Phasenmodulzweig stellen soll. Die Anforderung bedeutet, dass keine größere Spannung ausgeben werden kann, als in den Energiespeichern der Module gespeichert ist. $\sum {U}_{SM} \left(t\right) \geq {U}_{conv} \left(t\right)$

Wird die Beziehung (1) nicht erfüllt, kann der modularen Multilevelstromrichter außer Kontrolle geraten: Er kann die benötige Spannung nicht stellen, um seine die äußeren Größen (Strom, Spannung, Leistung, Blindleistung) zu kontrollieren. Die Folgen reichen von Nichterfüllung von Spezifikationen (z.B. Fehlerdurchfahren/fault ride through, Spannungsqualität/THD, garantierte Arbeitspunkte etc.) bis hin zu Schutzauslösungen aufgrund hoher Ströme. Erhebliche Probleme können die Folge sein.

Wird die Größe Aussteuergrad a(t) als der Quotient der gestellten zur stellbaren Spannung betrachtet, folgt für diesen Aussteuergrad $a \left(t\right) = \frac{{U}_{conv} \left(t\right)}{\sum {U}_{SM} \left(t\right)} \leq 1$

Der Aussteuergrad wird oft auch als "innerer Modulationsgrad" oder "innerer Modulationsindex" bezeichnet.

Der Aussteuergrad a(t) ist im Allgemeinen ein Zeitverlauf, der einmal pro Netzperiode T ein Maximum aufweist. Es ist hinreichend, die Bedingung nur auf diesen Spitzenwert des Aussteuergrades anzuwenden - zu allen anderen Zeitpunkten ist sie dann ebenfalls erfüllt. ${a}_{max} = {max}_{0 . . T} \left(\frac{{U}_{conv} \left(t\right)}{\sum {U}_{SM} \left(t\right)}\right) \leq 1$

Die unter dem Operator "max" stehende Angabe 0..T bedeutet: Maximalwert über die Zeit 0 bis T, d.h. Maximalwert über eine Periodendauer.

Je nach Genauigkeitsanforderung und weiteren Rahmenbedingungen (identische Module, hinreichend genaue Spannungsbalancierung innerhalb des Phasenmodulzweigs durch entsprechende Steuerung/Regelung der einzelnen Module innerhalb des Phasenmodulzweigs) kann der Aussteuergrad beschrieben werden als das Verhältnis der Anzahl Nₒₙ der eingeschalteten Module zur Gesamtzahl N_{verfügbar} der Module: $a \left(t\right) = \frac{{N}_{on} \left(t\right)}{{N}_{verf ü gbar}} \leq 1$

Die Stromrichter müssen folglich so dimensioniert sein (Anzahl der verbauten Module pro Zweig, Modulkapazität, Modulspannung), dass im Betriebspunkt mit den höchsten Anforderungen an das Verhältnis an Stellspannung zur stellbaren Spannung der Aussteuergrad <1 bleibt. Dabei wird vorteilhafterweise noch der für Regelung, Dynamik etc. einzuhaltende Sicherheitsabstand berücksichtigt. Üblich sind z.B. a<85% ... a<90% für kleinere Antriebsstromrichter. Großstromrichter für HVDC-Übertragungen, bei denen die Verluste eine hohe ökonomische Bedeutung haben, und die sehr hohen Reihenschaltzahlen N der Module aufweisen, können auch für höhere Aussteuergrade ausgelegt sein.

Wie eingangs beschrieben, ist es bekannt, im Sinne einer Energieregelung für den Betrieb des Stromrichters bzw. seiner Phasenmodulzweige einen Regler zu implementieren, der den Mittelwert
a) der Summenspannung **ΣU_{SM}(*t*)**
   oder alternativ
b) der einzelnen Modulspannungen ***U_{SM}*(*t*)**
   über alle Betriebspunkte konstant hält. Der Spannungsmittelwert kann auch als zeitlich gemittelte, im Phasenmodulzweig gespeicherten Energie ${W}_{conv} = {mean}_{0 . . T} \left(\frac{{C}_{SM}}{2}\sum {U}_{SM}^{2} \left(t\right)\right)$ dargestellt werden. C_{SM} ist dabei die Kapazität des Energiespeichers eines Moduls. Daher wird in diesem Sinne auch von der Stromrichter(modul)energie, sowie der Energieregelung des Phasenmodulzweigs bzw. der Energieregelung des Stromrichters gesprochen. Für die o.g. Variante b) (Regler, der den Mittelwert der einzelnen Modulspannungen ***U_{SM}*(*t*)** über alle Betriebspunkte konstant hält) gilt für die Modulenergie ${W}_{modul} = {mean}_{0 . . T} \left(\frac{{C}_{SM}}{2}{U}_{SM}^{2}\left(t\right)\right) .$

Man erhält eine Modulenergieregelung.

Die entsprechenden Regler vergleichen die in den Modulen bzw. im Phasenmodulzweig vorhandenen, zeitlich gemittelten Energien bzw. Spannungen mit dem (insbesondere festen) Sollwert, und stellen diese je nach Topologie durch Aufschaltung innerer und/oder äußerer Ströme im Stromrichter ein.

Die oben genannte Beziehung (1) ist so im Betrieb immer erfüllt. Der Stromrichter ist in stabilem Betrieb gehalten. Der Stromrichter kann anforderungsgemäß die äußeren Größen stellen.

Für eine Vielzahl von Arbeitspunkten sind die Verhältnisse im Quotienten $a \left(t\right) = \frac{{U}_{conv} \left(t\right)}{\sum {U}_{SM} \left(t\right)}$ aber erheblich einfacher als im worst-case-Arbeitspunkt, aus dem der Energie-Sollwert bestimmt ist. Speziell in Teil- und Schwachlast-Arbeitspunkten ist der Energieumsatz gering, ***U_{SM}*(*t*)** ist in Folge nur mit geringem Rippel beaufschlagt. Auch kann die Amplitude der Stellspannung U_{conv}(t) kleiner ausfallen als im worst-case-Arbeitspunkt, oder der zeitliche Verlauf beider Größen kann günstig zusammenfallen. In Folge ist in diesen Arbeitspunkten (d.h., in fast allen Arbeitspunkten) des Stromrichters unnötig viel Energie in den Phasenmodulzweigen gespeichert. Der Stromrichter kann unnötig viel Spannung stellen, die durchschnittliche Spannung der Module ist zu hoch.

Eine solche (Energie-)Regelung hat Nachteile:
- Es werden unnötig hohe Stromrichterverluste erzeugt, da die Schaltverluste der Halbleiter etwa linear mit der Modulspannung skalieren.
- Die Komponenten der Module werden unnötig mit Spannung belastet, was ihre Lebensdauer ungünstig beeinflusst.

Es befinden sich im zeitlichen Mittel unnötig viele Module im Freilaufzustand, in dem sie keine Spannung stellen (der Aussteuergrad ist niedrig). Dadurch werden die elektronischen Schaltelemente im Modul, die in diesem Zustand stromführend sind, stärker belastet. Exakt diese elektronischen Schaltelemente sind jedoch in den meisten modularen Multilevelstromrichter-Topologien (insbesondere bei der 6-Puls-Brückenschaltung mit Halbbrücken-Modulen) bereits am stärksten belastet und üblicherweise der limitierende Faktor bezüglich des maximalen Stromrichterstroms. Der zulässige Stromrichterstrom ist dadurch bei einer solchen bekannten Regelung nachteilig begrenzt.

Im Unterschied zu der bekannten Energieregelung wird die eingangs genannte Aufgabe dadurch gelöst, dass keine Energie oder Spannung, sondern der Maximalwert des Aussteuergrads (Spitzen-Aussteuergrad) insbesondere innerhalb einer Periode des Wechselspannungsnetzes (und insbesondere im quasistationären Zustand) auf einen festen oder arbeitspunktspezifisch vorgegeben Sollwert (z.B. aus einem Kennfeld) eingeregelt wird.

Dazu kann der Spitzen-Aussteuergrad für jeden Phasenmodulzweig z.B. gemäß den Beziehungen ${a}_{max} = {max}_{0 . . T} \left(\frac{{U}_{conv} \left(t\right)}{\sum {U}_{SM} \left(t\right)}\right)$ oder ${a}_{max} = {max}_{0 . . T} \frac{{N}_{on} \left(t\right)}{{N}_{verf ü gbar}}$ ermittelt werden.

Insbesondere die Größen ***U_{conv}*(*t*), ∑*U_{SM}*(*t*) *bzw. Nₒₙ*(*t*), *N*_{*verf*ü*gbar*}** sind in bestehenden Regelungen oft schon bekannt und/oder leicht ermittelbar.

Uconv(t) ist die vom Phasenmodulzweig (Konvertermodul) zu stellende bzw. die vom Phasenmodulzweig gestellte Spannung. Sie lässt sich messen und/oder anhand des Arbeitspunktes des Stromrichters und seiner Beschaltung berechnen.

∑U_{SM}(t) ist die Summe der Modulspannungen im Phasenmodulzweig. Sie lässt sich messen. Es kann hier zweckmäßig sein, nur die Spannungen fehlerfreier und der Regelung einwandfrei folgenden Module zu berücksichtigen.

Nₒₙ ist die Anzahl der spannungsstellenden Module im Phasenmodulzweig (d.h. die Anzahl der eingeschalteten Module), sie lässt sich insbesondere aus der Stromrichtermodulsteuerung ermitteln.

N_{verfügbar} ist die Anzahl der Module des Phasenmodulzweigs. Auch hier kann zweckmäßig sein, nur fehlerfreie und der Regelung einwandfrei folgende Module zu berücksichtigen.

Der Maximalwert kann durch verschiedene Elemente der Signalverarbeitung gebildet werden. Vorteilhaft ist z.B. eine digitale/algorithmische Umsetzung eines Maximalwertbilders.

Ein dem Maximalwertbilder nachgeschalteter Regler vergleicht den ermittelten Maximalwert des Aussteuergrads mit einem Sollwert und stellt den Maximalwert ein, beispielsweise durch Aufschaltung innerer und/oder äußerer Ströme im Stromrichter.

### Dabei gilt sinngemäß:

Ist der Maximalwert des Aussteuergrads des Phasenmodulzweigs größer als der angestrebte Sollwert, so wird der Energieinhalt des Phasenmodulzweigs bzw. der Module erhöht.

Ist der Maximalwert des Aussteuergrads des Phasenmodulzweigs kleiner als der Sollwert, so wird der Energieinhalt des Phasenmodulzweigs bzw. der Submodule gesenkt.

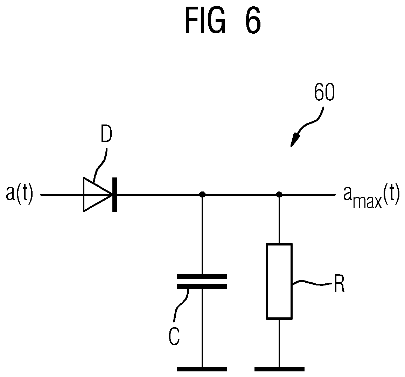

Das Verhalten des Reglers kann für beide Richtungen unterschiedlich ausgeprägt sein. Günstig kann z.B. eine hohe Sensitivität / Verstärkung bei zu hohem Aussteuergrad sein, während die Sensitivität / Verstärkung bei zu geringem Aussteuergrad niedrig eingestellt ist. So wird erreicht, dass der Stromrichter bei zu geringer Energie/stellbarer Spannung - also zu geringem Abstand zum Kontrollverlust - schnell und sicher aus diesem riskanten Zustand gebracht wird. Bei zu hoher Energie, also einer bezüglich der Stabilität unkritischen, aber bezüglich der Verluste nicht optimalen Situation, erfolgt eine langsame Annäherung an das Optimum bezüglich der Verluste. Die im Zusammenhang mit Figur 6 gezeigte Möglichkeit zur Maximalwertdetektion beinhaltet bereits diese Eigenschaften.

Durch die so gestaltete Regelung wird die PhasenmodulzweigEnergie arbeitspunktadaptiv soweit abgesenkt, dass im quasistationären Betrieb immer gerade der Sollwert des Maximalwerts des Aussteuergrads erreicht wird. Es ist dann insbesondere immer mindestens der entsprechende Sicherheitsabstand zum Kontrollverlust gegeben, aber die Modulspannungen sind nicht höher, als dafür benötigt. Im Vergleich mit der Regelung auf einen Energiesollwert (Energieregelung) wird die Phasenmodulzweigenergie in Arbeitspunkten, in denen sie zu hoch ist, automatisch abgesenkt.

Die Regelung kann so realisiert werden, dass die Regeleinrichtung zur Regelung des Maximalwerts des Aussteuergrads den Energiesollwert für einen Energieregler ändert. Die Regeleinrichtung zur Regelung des Maximalwerts des Aussteuergrads wird dann dem Energieregler übergeordnet.

Es ist aber auch möglich, den Energieregler entfallen zu lassen, also eine Energieregler-freie Regelung zu nutzen. Der Stromrichter kann dann über eine Regelung der Spannungsverhältnisse oder der Schaltzustandsverhältnisse der Module geführt bzw. geregelt werden. Es entfällt dann die aufwändige Berechnung der Stromrichterenergie bzw. der Phasenmodulzweigenergie, die beispielsweise aufwändig über ein Quadrieren der einzelnen Spannungen der Module und darauffolgender Summation erfolgen müsste.

Die Regelung des Maximalwerts des Aussteuergrads kann für jeden Phasenmodulzweig getrennt erfolgen. Es können dann insbesondere auch gegebenenfalls vorhandene Redundanzmodule der Phasenmodulzweige für eine Senkung der Modulspannungen genutzt werden.

Die Regelung des Maximalwerts des Aussteuergrads kann aber auch als Vereinfachung auf den gesamten Stromrichter angewendet werden. Es wird dann nur der höchste Maximalwert des Aussteuergrads aₘₐₓ(t) aller vorhandenen Phasenmodulzweige verwendet, und alle Phasenmodulzweige (Konvertermodule) werden auf denselben Sollwert geregelt. Sind in den einzelnen Phasenmodulzweigen ggf. unterschiedliche Anzahlen von Redundanzmodulen vorhanden, dann können diese gegebenenfalls nicht alle zur Spannungsabsenkung genutzt werden. Die automatische arbeitspunktspezifische/arbeitspunktadaptive Absenkung der Spannung der Module ist aber weiterhin gegeben.

Im Folgenden wird die Erfindung anhand von Ausführungsbeispielen näher erläutert. Gleiche Bezugszeichen verweisen dabei auf gleiche oder gleichwirkende Elemente.

Dazu ist in
- Figur 1: ein Ausführungsbeispiel eines modularen Multilevelstromrichters in Brückenschaltung, in
- Figur 2: eine weiteres Ausführungsbeispiel eines modularen Multilevelstromrichters in Dreieckschaltung, in
- Figur 3: ein Ausführungsbeispiel eines Phasenmodulzweigs, in
- Figur 4: ein Ausführungsbeispiel eines Moduls in Halbbrückentechnik, in
- Figur 5: ein Ausführungsbeispiel eines Moduls in Vollbrückentechnik, in
- Figur 6: ein Ausführungsbeispiel eines Maximalwertbilders, in
- Figur 7: ein beispielhafter Verlauf des Aussteuergrads eines Phasenmodulzweigs, in
- Figur 8: eine beispielhafte Regelschleife zur Regelung des Maximalwerts des Aussteuergrads, in
- Figur 9: eine weitere beispielhafte Regelschleife zur Reglung des Maximalwerts des Aussteuergrads,
- Figur 10: beispielhafte zeitliche Verläufe von Aussteuergraden bei der bekannten Energieregelung, und in
- Figur 11: beispielhafte zeitliche Verläufe von Aussteuergraden bei der Regelung des Maximalwerts des Aussteuergrads
dargestellt.

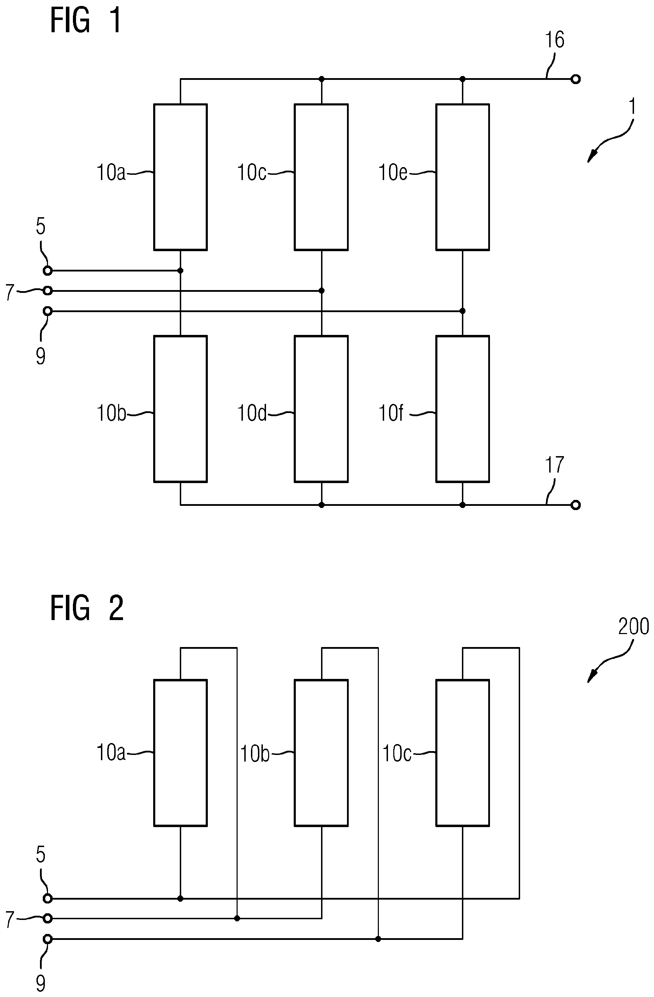

In Figur 1 ist ein Ausführungsbeispiel eines modularen Multilevelstromrichters 1 dargestellt. Dieser Multilevelstromrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 10a und einem zweiten Phasenmodulzweig 10b verbunden. Der erste Phasenmodulzweig 10a und der zweite Phasenmodulzweig 10b bilden ein erstes Phasenmodul des modularen Multilevelstromrichters 1. Das dem ersten Wechselspannungsanschluss 5 abgewandte Ende des ersten Phasenmodulzweigs 10a ist mit einem ersten Gleichspannungsanschluss 16 elektrisch verbunden; das dem ersten Wechselspannungsanschluss 5 abgewandte Ende des zweiten Phasenmodulzweigs 10b ist mit einem zweiten Gleichspannungsanschluss 17 elektrisch verbunden. Der erste Gleichspannungsanschluss 16 ist ein positiver Gleichspannungsanschluss, der zweite Gleichspannungsanschluss 17 ist ein negativer Gleichspannungsanschluss.

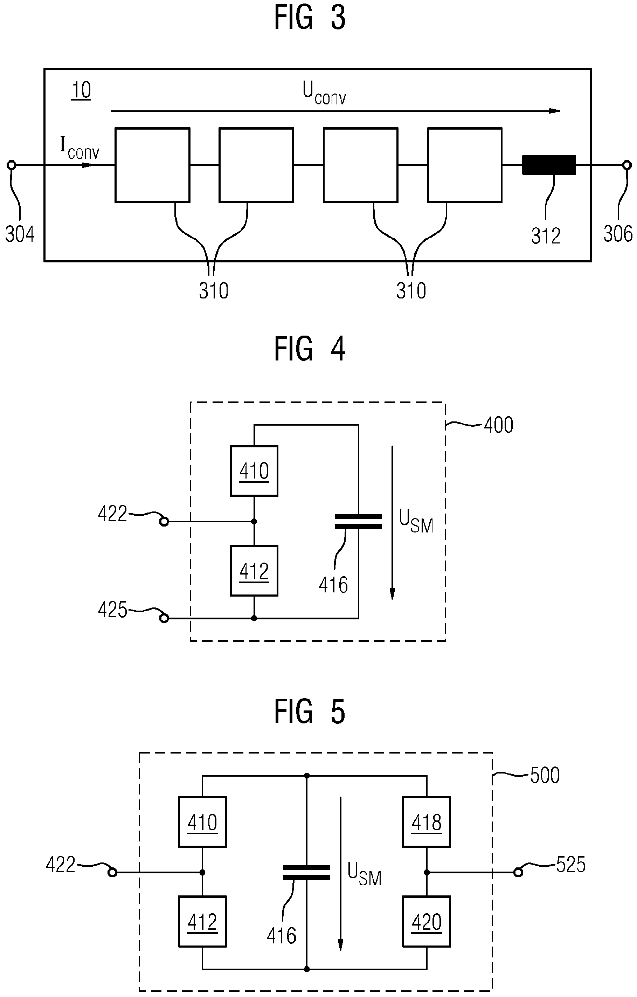

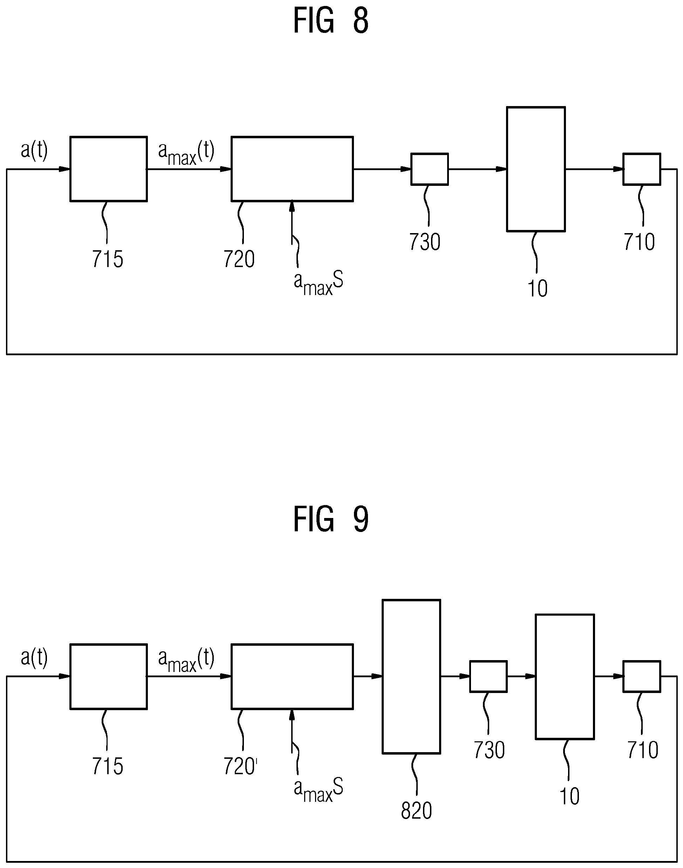

Der zweite Wechselspannungsanschluss 7 ist mit einem Ende eines dritten Phasenmodulzweigs 10c und mit einem Ende eines vierten Phasenmodulzweigs 10d elektrisch verbunden. Der dritte Phasenmodulzweig 10c und der vierte Phasenmodulzweig 10d bilden ein zweites Phasenmodul. Der dritte Wechselspannungsanschluss 9 ist mit einem Ende eines fünften Phasenmodulzweigs 10e und mit einem Ende eines sechsten Phasenmodulzweigs 10f elektrisch verbunden. Der fünfte Phasenmodulzweig 10e und der sechste Phasenmodulzweig 10f bilden ein drittes Phasenmodul. Jeder Phasenmodulzweig weist eine Mehrzahl von Modulen auf, welche (mittels ihrer Modulanschlüsse) elektrisch in Reihe geschaltet sind. Dies wird im Folgenden im Zusammenhang mit Figur 3 erläutert. Die einzelnen Module der Phasenmodulzweige werden von einer Ansteuerung (vgl. Figuren 8 und 9) angesteuert. Diese Ansteuerung kann bei Bedarf die einzelnen Module so ansteuern, dass jedes der Module eine Spannung einer Polarität, eine Spannung der Größe Null (eine sogenannte Nullspannung) oder ggf. auch eine Spannung der entgegengesetzten Polarität bereitstellt. Dadurch wird die Phasenmodulzweigspannung U_{conv} erzeugt.

Der modulare Multilevelstromrichter 1 ist im Ausführungsbeispiel der Figur 1 ein modularer Multilevelstromrichter in einer Brückenschaltung, genauer gesagt in einer 6-Puls-Brückenschaltung.

In Figur 2 ist ein weiterer modularer Multilevelstromrichter 200 dargestellt, der eine Dreieckschaltung aufweist (auch als Delta-Schaltung bezeichnet). Dieser Multilevelstromrichter 200 weist lediglich den ersten Phasenmodulzweig 10a, den zweiten Phasenmodulzweig 10b und den dritten Phasenmodulzweig 10c auf. Diese drei Phasenmodulzweige 10a, 10b und 10c sind in einer Dreieckschaltung geschaltet, wobei die Eckpunkte des Dreiecks jeweils als der Wechselspannungsanschluss 5, 7 bzw. 9 herausgeführt sind.

In Figur 3 ist ein Ausführungsbeispiel eines Phasenmodulzweigs 10 dargestellt. Die in den Figuren 1 und 2 dargestellten Phasenmodulzweige können insbesondere so wie der Phasenmodulzweig 10 ausgestaltet sein.

Der Phasenmodulzweig 10 weist einen ersten Zweiganschluss 304 und einen zweiten Zweiganschluss 306 auf. Der erste Zweiganschluss 304 ist elektrisch verbunden mit einem Ende einer Reihenschaltung aus einer Mehrzahl von Modulen 310. Das andere Ende der Reihenschaltung der Module 310 ist über eine Drosselspule 312 mit dem zweiten Zweiganschluss 306 elektrisch verbunden. An dem Phasenmodulzweig 10 tritt die Phasenmodulzweigspannung U_{conv} auf. Durch den Phasenmodulzweig 10 fließt der Phasenmodulzweigstrom I_{conv}. Die Phasenmodulzweigspannung U_{conv} ist diejenige Spannung, die zwischen den beiden Zweiganschlüssen 304 und 306 ausgegeben wird, wie in Figur 3 durch einen Pfeil symbolisiert ist.

Die Anzahl der Module in dem Phasenmodulzweig 10 kann sehr unterschiedlich sein. Mindestens müssen zwei Module 310 in Reihe geschaltet sein, es kann aber auch eine erheblich größere Anzahl an Modulen in Reihe geschaltet sein. So können beispielsweise mehrere zehn oder auch mehrere hundert Module in Reihe geschaltet sein, wodurch entsprechend hohe Phasenmodulzweigspannungen U_{conv} realisierbar sind.

Der Phasenmodulzweig 10 kann auch überzählige Module aufweisen. Das sind Module, die während des Betriebs des Multilevelstromrichters ausfallende Module ersetzen sollen und die eigentlich nicht notwendig wären, wenn idealerweise keine Module des Multilevelstromrichters ausfallen würden. Derartige Module werden auch als Redundanzmodule bezeichnet. Vorteilhafterweise werden diese überzähligen Module beim Betrieb des Multilevelstromrichters stets auch in Betrieb genommen, d.h. die Energiespeicher dieser Module werden ebenfalls aufgeladen und bei Bedarf tragen auch die Spannungen der Energiespeicher dieser Module zu der Phasenmodulzweigspannung U_{conv} bei. Dadurch stehen insbesondere mehr Module in der Reihenschaltung des Phasenmodulzweigs zur Verfügung, so dass sich die Spannung auf mehr Module verteilen kann und dadurch die einzelnen Module nur mit einer geringeren mittleren Spannung belastet werden. Dadurch wird die Lebensdauer der Module erhöht.

Die Module 310 der Phasenmodulzweige können verschiedene Ausgestaltungen haben. Die Module weisen insbesondere zwei Modulanschlüsse auf; es handelt sich also insbesondere um zweipolige Module. Im Folgenden werden beispielhaft zwei Varianten solcher Module beschrieben.

In Figur 4 ist ein Ausführungsbeispiel eines Moduls 400 des Phasenmodulzweigs 10 dargestellt, wobei das Modul 400 als ein Halbbrücken-Modul 400 ausgestaltet ist. Das Modul 400 weist ein erstes (abschaltbares) elektronisches Schaltelement 410, ein zweites (abschaltbares) elektronisches Schaltelement 412 sowie einen Energiespeicher 416 auf. Der elektrische Energiespeicher 416 ist ein Kondensator 416. Über dem Kondensator 416 liegt die Energiespeicherspannung U_{SM} an, welche im Ausführungsbeispiel (bei entsprechender Schaltung des ersten elektronischen Schaltelements 410 und des zweiten elektronischen Schaltelements 412) die bereitstellbare Modulspannung des Moduls 400 ist.

Das erste elektronische Schaltelement 410 und das zweite elektronische Schaltelement 412 können beispielsweise jeweils als ein IGBT (Insulated-Gate Bipolar Transistor) mit einer antiparallel geschalteten Diode ausgestaltet sein. Das erste Schaltelement 410 ist elektrisch in Reihe geschaltet mit dem zweiten Schaltelement 412. Am Verbindungspunkt zwischen den beiden elektronischen Schaltelementen 410 und 412 ist ein erster (galvanischer) Modulanschluss 422 angeordnet. An dem Anschluss des zweiten elektronischen Schaltelements 412, welcher dem Verbindungspunkt gegenüber liegt, ist ein zweiter (galvanischer) Modulanschluss 425 angeordnet. Der zweite Modulanschluss 425 ist weiterhin mit einem ersten Anschluss des Energiespeichers 416 elektrisch verbunden; ein zweiter Anschluss des Energiespeichers 416 ist elektrisch verbunden mit dem Anschluss des ersten elektronischen Schaltelements 410, der dem Verbindungspunkt gegenüber liegt.

Der Energiespeicher 416 ist also elektrisch parallelgeschaltet zu der Reihenschaltung aus dem ersten elektronischen Schaltelement 410 und dem zweiten elektronischen Schaltelement 412. Durch entsprechende Ansteuerung des ersten elektronischen Schaltelements 410 und des zweiten elektronischen Schaltelements 412 kann erreicht werden, dass zwischen dem ersten Modulanschluss 422 und dem zweiten Modulanschluss 425 entweder die Spannung des Energiespeichers 416 ausgegeben wird oder keine Spannung ausgegeben wird (d.h. eine Nullspannung ausgegeben wird). Durch Zusammenwirken der Module des Phasenmodulzweigs kann so die jeweils gewünschte Phasenmodulzweigspannung erzeugt werden.

In Figur 5 ist ein weiteres Ausführungsbeispiel eines Moduls 500 des Phasenmodulzweigs dargestellt. Bei diesem Modul 500 handelt es sich um ein Vollbrücken-Modul.

Zusätzlich zu dem bereits aus Figur 4 bekannten ersten elektronischen Schaltelement 410, zweiten elektronischen Schaltelement 412 und Energiespeicher 416 weist das in Figur 5 dargestellte Modul 500 zusätzlich ein drittes elektronisches Schaltelement 418 und ein viertes elektronisches Schaltelement 420 auf. Das dritte elektronische Schaltelement 418 und das vierte elektronische Schaltelement 420 können ebenfalls als ein IGBT mit antiparallel geschalteter Freilaufdiode ausgestaltet sein. Im Unterschied zur Schaltung der Figur 4 ist der zweite Modulanschluss 525 nicht mit dem zweiten elektronischen Schaltelement 412 elektrisch verbunden, sondern mit einem Mittelpunkt (Verbindungspunkt) einer elektrischen Reihenschaltung aus dem dritten elektronischen Schaltelement 418 und dem vierten elektronischen Schaltelement 420.

Das Vollbrücken-Modul 500 zeichnet sich dadurch aus, dass bei entsprechender Ansteuerung der vier elektronischen Schaltelemente zwischen dem ersten Modulanschluss 422 und dem zweiten Modulanschluss 525 wahlweise entweder die positive Spannung des Energiespeichers 416, die negative Spannung des Energiespeichers 416 oder eine Spannung des Wertes Null (Nullspannung) ausgegeben werden kann. Somit kann mittels des Moduls 500 die Polarität der Ausgangsspannung umgekehrt werden. Ein Phasenmodulzweig des Multilevelstromrichters kann beispielsweise entweder nur Halbbrücken-Module, nur Vollbrücken-Module oder auch Halbbrücken-Module und Vollbrücken-Module aufweisen.

In Figur 6 ist ein Ausführungsbeispiel eines Maximalwertbilders 60 (peak detector 60) dargestellt. An einem Eingang des Maximalwertbilders 60 wird ein Signal mit dem zeitlichen Verlauf des Aussteuergrads a(t) eingespeist. Das Signal des Aussteuergrads a(t) lädt über eine Diode D einen Kondensator C auf. Dabei lädt sich der Kondensator C auf den Maximalwert des Signals des Aussteuergrads a(t) auf, so dass an einem Ausgang des Maximalwertbilders 60 ein Signal mit dem zeitlichen Verlauf des Maximalwerts des Aussteuergrads aₘₐₓ(t) ausgegeben wird. Der Kondensator C entlädt sich (relativ langsam) mit einer vorgegebenen Zeitkonstante über einen Widerstand R. Dadurch wird sichergestellt, dass der Kondensator C nicht dauerhaft auf einem einmal erreichten Spannungs-Maximalwert aufgeladen bleibt. Dadurch kann der Maximalwertbilder 60 auch bei zeitlichen Verläufen des Aussteuergrads a(t) mit kleiner werdenden Maximalwerten korrekt arbeiten.

Die Funktionsweise dieses Maximalwertbilders 60 wird erfindungsgemäß zeitdiskret digital nachgebildet durch den folgenden Programm-Code.

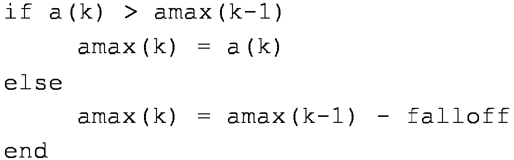

Dabei ist a(k) eine zeitdiskrete Folge des Aussteuergrads und amax(k) eine zeitdiskrete Folge des Maximalwerts des Aussteuergrads. Der Wert falloff simuliert die Entladung des Kondensators C über den Widerstand R. k ist der Index der zeitdiskreten zweitdiskreten Werte.

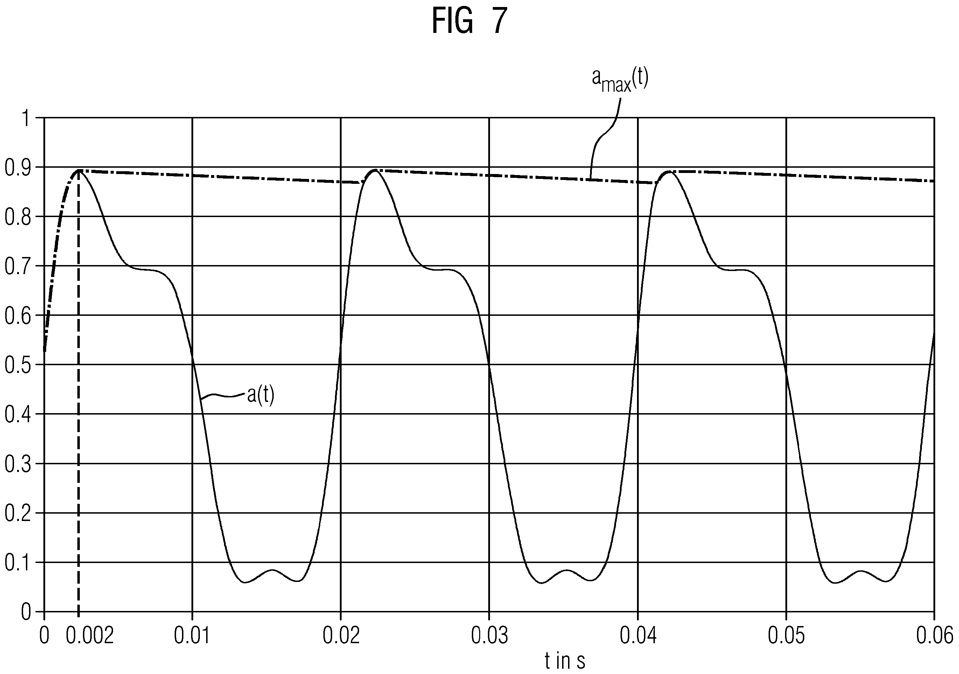

In Figur 7 ist in einem Diagramm ein beispielhafter Verlauf des Aussteuergrads a(t) des Phasenmodulzweigs 10 und des Maximalwerts aₘₐₓ(t) des Aussteuergrads dargestellt. Dabei beschreibt der Aussteuergrad a(t) das Verhältnis zwischen der von dem Phasenmodulzweig ausgegebenen Phasenmodulzweigspannung und der maximal ausgebbaren Phasenmodulzweigspannung. Die maximal ausgebbare Phasenmodulzweigspannung entspricht der Summe der Spannungen der Energiespeicher der Module des Phasenmodulzweigs. Daher beschreibt der Aussteuergrad a(t) das Verhältnis zwischen der von dem Phasenmodulzweig ausgegebenen Phasenmodulzweigspannung und der Summe der Spannungen der Energiespeicher der Module des Phasenmodulzweigs.

In dem Diagramm ist auf der X-Achse die Zeit t in Sekunden und auf der Y-Achse der Aussteuergrad a(t) und der Maximalwert aₘₐₓ(t) des Aussteuergrads in normierter Form von 0 bis 1 (entspricht 0% bis 100%) dargestellt. Der Aussteuergrad a(t) ist im Ausführungsbeispiel eine periodische Funktion mit der Periodendauer T=0,02 s, was einer Frequenz von 50 Hz entspricht. Es ist gut zu erkennen, dass der Aussteuergrad a(t) während jeder Periode T ein Maximum aufweist, das im Ausführungsbeispiel bei 0,9 (entspricht 90%) liegt. Im oberen Teil der Figur ist mittels einer Strich-Punkt-Linie der Verlauf des Maximalwerts des Aussteuergrads aₘₐₓ(t) dargestellt. Im Bereich von 0 bis ca. 0,002 Sekunden steigt der Verlauf des Aussteuergrads a(t) kontinuierlich an; daher entspricht in diesem Bereich der Verlauf des Maximalwerts aₘₐₓ(t) dem Verlauf des Aussteuergrades a(t). Nach dem Zeitpunkt t=0,002 s fällt der Verlauf des Aussteuergrades ab, so dass der Maximalwert des Aussteuergrads dem abfallenden Verlauf des Aussteuergrads nicht folgt, sondern (nahezu) konstant bleibt. Jedoch bleibt der Maximalwert des Aussteuergrades nicht absolut konstant, da der Maximalwertbilder andernfalls nicht in der Lage wäre, sich an einen mit der Zeit geringer werdenden Maximalwert des Aussteuergrads anzupassen. Aus diesem Grund ist der Maximalwertbilder so ausgestaltet, dass der Maximalwert des Aussteuergrads mit der Zeit linear abfällt. Das entspricht dem oben erläuterten Wert falloff. Kurz vor dem Zeitpunkt T + 0,002 s wird der aktuelle Wert des Aussteuergrads größer als der (bis dahin schon etwas durch den Wert falloff abgefallene) Wert des Maximalwerts des Aussteuergrads, so dass der Maximalwert des Aussteuergrads dann wieder dem ansteigenden Abschnitt des Aussteuergrads folgt. Danach wiederholt sich der Ablauf periodisch mit der Periodendauer T.

In Figur 8 ist ein beispielhafter Regelkreis für eine Reglung eines modularen Multilevelstromrichters dargestellt. Von dem modularen Multilevelstromrichter ist in der Figur lediglich ein Phasenmodulzweig 10 dargestellt, für die anderen Phasenmodulzweige findet die Regelung in gleichartiger Weise statt.

Mittels einer Ermittlungseinrichtung 710 wird der Aussteuergrad a(t) des Phasenmodulzweigs 10 ermittelt. Dies kann - wie oben ausführlich erläutert - beispielsweise erfolgen durch Auswertung der Spannungen der Module des Phasenmodulzweigs oder durch Auswertung der Anzahl der eingeschalteten Module des Phasenmodulzweigs.

Der Aussteuergrad a(t) wird zu einem Maximalwertbilder 715 übertragen. Der Maximalwertbilder 715 ermittelt aus dem Aussteuergrad a(t) den Maximalwert aₘₐₓ(t) des Aussteuergrads a(t). Dieser Maximalwert aₘₐₓ(t) des Aussteuergrads bildet eine Eingangsgröße für eine Regeleinrichtung 720. Ein Sollwert aₘₐₓs(t) für den Maximalwert aₘₐₓ(t) des Aussteuergrads bildet einen weiteren Eingangswert für die Regeleinrichtung 720. Die Regeleinrichtung 720 ermittelt die von den Modulen 310 des Phasenmodulzweigs 10 auszugebenden Spannungen und überträgt Informationen über diese auszugebenden Spannungen zu einer Ansteuerung 730. Die Ansteuerung 730 setzt diese Informationen in Ansteuersignale für die einzelnen elektronischen Schaltelemente der entsprechenden Module um und überträgt diese Ansteuersignale zu den einzelnen Modulen 310 des Phasenmodulzweigs 10. Daraufhin werden die einzelnen Module 310 des Phasenmodulzweigs 10 derart geschaltet, dass an den Modulen die gewünschten Spannungen auftreten und damit auch der gewünschte Sollwert aₘₐₓs(t) des Maximalwerts des Aussteuergrads auftritt. Daraufhin wird von der Ermittlungseinrichtung 710 wieder der Aussteuergrad a(t) ermittelt und zu dem Maximalwertbilder 715 rückgeführt.

Als Sollwert aₘₐₓs(t) des Maximalwerts des Aussteuergrads kann ein konstanter Sollwert aₘₐₓs verwendet werden oder ein arbeitspunktabhängiger Sollwert aₘₐₓs(t). Ein derartiger vom Arbeitspunkt des Phasenmodulzweigs abhängiger Sollwert kann insbesondere aus einem Kennfeld ausgelesen werden oder rechnerisch aus der Arbeitspunktspannung U_{conv} und dem Arbeitspunktstrom I_{conv} ermittelt werden.

Vorzugsweise wird ein Sollwert aₘₐₓs für den Maximalwert aₘₐₓ(t) des Aussteuergrads vorgegeben, der um einen vorgewählten Sicherheitsabstand kleiner ist als 1 (also kleiner als 100%). Dadurch wird sichergestellt, dass der modulare Multilevelstromrichter kontrollierbar bzw. regelbar bleibt, d.h., dass die von dem modularen Multilevelstromrichter erzeugte Spannung bei Bedarf in beide Richtungen variiert werden kann, also erhöht oder verringert werden kann. Der Sicherheitsabstand kann beispielsweise 15% betragen, so dass der Sollwert aₘₐₓs im Beispiel 0,85 beträgt.

Optional kann für alle Phasenmodulzweige des Multilevelstromrichters (also beispielsweise beim Multilevelstromrichter der Figur 1 für die sechs Phasenmodulzweige 10a bis 10f) ein gemeinsamer Sollwert aₘₐₓs(t) für den Maximalwert des Aussteuergrads a(t) verwendet werden. Der Maximalwertbilder 715 ermittelt dann den größten der sechs Maximalwerte der einzelnen Phasenmodulzweige und gibt diesen als den Maximalwert aₘₐₓ(t) an die Regeleinrichtung 720 weiter.

In Figur 9 ist ein weiteres Ausführungsbeispiel einer Regelschleife zum Regeln des Maximalwerts des Aussteuergrads dargestellt. Diese Regelschleife unterscheidet sich von der Regelschleife der Figur 8 im Wesentlichen dadurch, dass zwischen der Regeleinrichtung 720' und der Ansteuerung 730 eine weitere Regeleinrichtung 820 geschaltet ist. Die weitere Regeleinrichtung 820 kann beispielsweise eine Regeleinrichtung für die Energie es Phasenmodulzweigs 10 (also für die in dem Phasenmodulzweig 10 gespeicherte Gesamtenergie) oder eine Regeleinrichtung für den durch den Phasenmodulzweig 10 fließenden Strom I_{conv} oder eine Regeleinrichtung für die Phasenmodulzweigspannung U_{conv} sein. Die Regeleinrichtung 720' (welche den Maximalwert aₘₐₓ(t) des Aussteuergrads a(t) regelt) bildet eine übergeordnete Regeleinrichtung zu der weiteren Regeleinrichtung 820. Die Regeleinrichtung 720' gibt einen dem entsprechenden Sollwert aₘₐₓs zugehörigen Sollwert für die Phasenmodulzweigenergie oder für die Phasenmodulzweigspannung an die weitere Regeleinrichtung 820 aus. Die weitere Regeleinrichtung 820 regelt dann die Phasenmodulzweigenergie oder die Phasenmodulzweigspannung und gibt die entsprechenden Modulspannungen an die Ansteuerung 730 aus. Diese Variante des Regelkreises ist besonders vorteilhaft, wenn bereits ein Multilevelstromrichter mit einer weiteren Regeleinrichtung 820' vorhanden ist, die durch Ergänzen mit der übergeordneten Regeleinrichtung 720' auf die Regelung des Maximalwerts aₘₐₓ(t) des Aussteuergrads a(t) aufgerüstet werden soll.

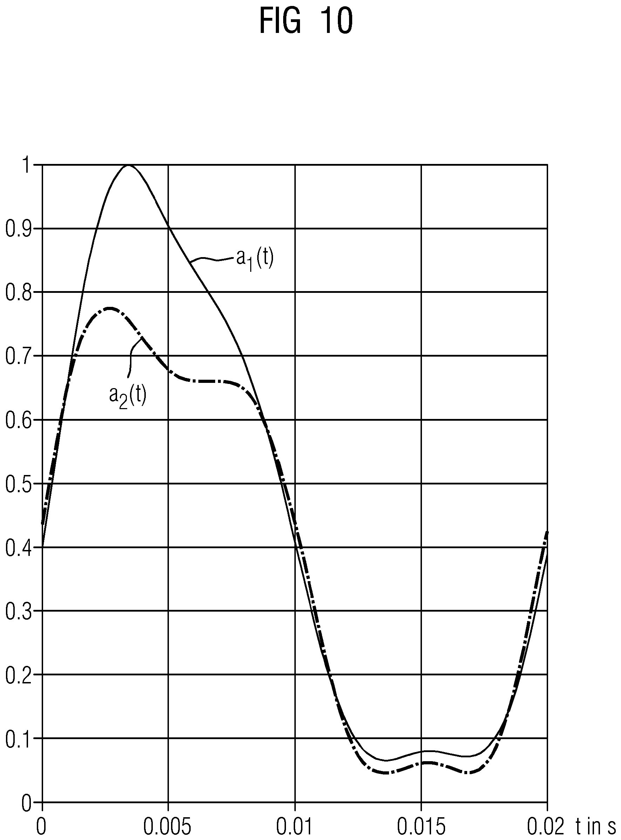

In Figur 10 ist ein beispielhafter zeitlicher Verlauf von Aussteuergraden bei der oben beschriebenen Energieregelung auf konstante Energie gemäß dem Stand der Technik dargestellt. Dabei ist für zwei verschiedene Arbeitspunkte 1 und 2 jeweils der zeitliche Verlauf des dem ersten Arbeitspunkt zugehörigen ersten Aussteuergrads a1(t) und der zeitliche Verlauf des dem zweiten Arbeitspunkt zugehörigen zweiten Aussteuergrads a2(t) dargestellt. Auf der x-Achse ist die Zeit in s für eine Periode (0,02 s) der Netzfrequenz aufgetragen, auf der y-Achse die Aussteuergrade a1(t) und a2(t). Dabei ist der zu dem ersten Arbeitspunkt zugehörige erste Aussteuergrad a1(t) als durchgehende Linie dargestellt und der dem zweiten Arbeitspunkt zugehörige zweite Aussteuergrad a2(t) als Strich-Punkt-Linie. Der erste Arbeitspunkt 1 und der zweite Arbeitspunkt 2 sind miteinander gekoppelt derart, dass die mittlere in dem Phasenmodulzweig gespeicherte Energie bei beiden Arbeitspunkten gleich groß ist.

Der erste Arbeitspunkt 1 ist der worst-case-Arbeitspunkt, also der Arbeitspunkt mit den ungünstigsten Bedingungen für den Stromrichter. Die Energieregelung ist so eingestellt, dass auch in diesem worst-case-Arbeitspunkt 1 der Stromrichter noch funktioniert. Dies sieht man daran, dass der erste Aussteuergrad a1(t) den Wert 1 erreicht, aber nicht überschreitet. Hier ist kein Sicherheitsabstand zum Wert 1 dargestellt, weil lediglich das Prinzip erläutert werden soll. In der Praxis würde man die Regelung so einstellen, dass ein Sicherheitsabstand zum Wert 1 eingehalten wird - der Maximalwert des Aussteuergrads würde dann ein Wert kleiner als 1 sein, beispielsweise 0,9.

Der zu dem zweiten Arbeitspunkt zugehörige zweite Aussteuergrad a2(t) weist ein deutlich kleineres Maximum auf, das etwa bei 0,77 liegt. Das bedeutet, dass in dem Phasenmodulzweig mehr Energie gespeichert ist, als für den zweiten Arbeitspunkt notwendig ist. Der Aussteuergrad a2(t) ist beim zweiten Arbeitspunkt also vergleichsweise klein. Dies führt zu den Nachteilen, die oben im Zusammenhang mit der Energieregelung angegeben sind.

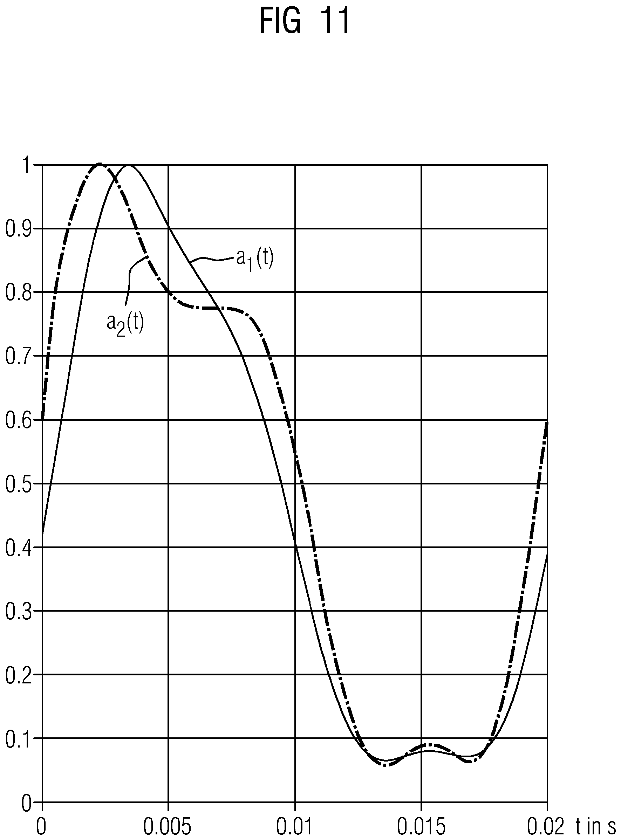

In Figur 11 ist ein beispielhafter zeitlicher Verlauf von Aussteuergraden für das beschriebene Verfahren und die beschriebene Anordnung mit Regelung des Maximalwerts des Aussteuergrads dargestellt. Die beiden Arbeitspunkte 1 und 2 des Stromrichters sind identisch mit den Arbeitspunkten der vorigen Figur. Der zu dem ersten Arbeitspunkt zugehörige erste Aussteuergrad a1(t) und der zu dem zweiten Arbeitspunkt zugehörige zweite Aussteuergrad a2(t) weisen beide als Maximalwert den Wert 1 auf. Auch der Arbeitspunkt 2 ist also voll ausgesteuert. Die im Phasenmodulzweig gespeicherte Energie ist für diesen zweiten Arbeitspunkt 2 verringert im Vergleich zu der oben dargestellten Energieregelung. Es ist also beim Arbeitspunkt 2 auch die mittlere Spannung der Energiespeicher der Module des Phasenmodulzweigs verringert. Daher erreicht auch beim Arbeitspunkt 2 der Maximalwert des Aussteuergrads seinen Sollwert (hier 1, entspricht 100%). Außerdem ist - im Mittel über alle Arbeitspunkte des Stromrichters betrachtet - die in dem Phasenmodulzweig auftretende Maximalspannung geringer als bei der Energieregelung auf konstante Energie. Daher kann der modulare Multilevelstromrichter mit der beschriebenen Regelanordnung und dem beschriebenen Regelverfahren mit weniger Modulen realisiert werden als bei Energieregelung.

Es wurde ein Verfahren zum Regeln eines modularen Multilevelstromrichters sowie eine Anordnung zum Regeln eines modularen Multilevelstromrichters beschrieben, mit denen ein modularer Multilevelstromrichter derart geregelt werden kann, dass in den Modulen dieses Stromrichters nur vergleichsweise geringe Verluste auftreten und die Module eine vergleichsweise lange Lebensdauer aufweisen. Dies wird dadurch erreicht, dass der Maximalwert des Aussteuergrads mindestens eines Phasenmodulzweigs des Stromrichters auf einen Sollwert für diesen Maximalwert des Aussteuergrads geregelt wird. Dadurch werden unnötig hohe Energieinhalte der Module und daher auch unnötig hohe Spannungen der Energiespeicher der Module vermieden. Das führt zu signifikant verringerten Verlustleistungen und in Folge einer geringeren Spannungsbeanspruchung der Bauelemente zu einer längeren Lebensdauer der Module.

Das beschriebene Verfahren zum Regeln des Maximalwerts des Aussteuergrads und die beschriebene Anordnung können einzelne, mehrere oder alle der folgenden Merkmale bzw. Vorteile aufweisen. An Vorteilen werden genannt:
- Es erfolgt eine automatische Absenkung der Spannung der Energiespeicher in Arbeitspunkten, in denen keine hohe Stromrichterenergie (und damit keine hohen Spannungen an den Energiespeichern der Module des Stromrichters) benötigt wird.
- Es resultiert eine Schonung der Komponenten der Module und eine höhere Lebensdauer der Module.
- Die Stromrichterverluste können gesenkt werden. Bei Volllast des Stromrichters wird die Senkung der Verluste relativ gering sein, bei Schwachlast, d.h. bei einer geringen Auslastung des Stromrichters, sind jedoch größere Senkungen der Verluste realisierbar.
- Der Maximalwert des Aussteuergrads bleibt arbeitspunktunabhängig im Wesentlichen konstant und sinkt insbesondere bei Unterspannung oder bei einem Teillastbetrieb nicht ab. Dadurch werden die elektronischen Schaltelemente der Module im Freilaufzustand entlastet. Der Freilaufzustand liegt vor, wenn ein Modul keine von Null verschiedene Spannung an seinen Modulanschlüssen zur Verfügung stellt, d.h. wenn das Modul nicht wirksam zur Phasenmodulzweigspannung beiträgt. Beispielsweise ist beim Halbbrücken-Modul im Freilaufzustand das zweite elektronische Schaltelement 412 eingeschaltet. Dieses zweite elektronische Schaltelement 412 wird beim Halbbrücken-Modul am stärksten belastet, wodurch der maximal zulässige Strom begrenzt wird. Beim Halbbrücken-Modul wird insbesondere dieses zweite elektronische Schaltelement entlastet, beim Vollbrücken-Modul können alle vier elektronischen Schaltelemente entlastet werden. Bei beiden Modulen ergibt sich eine Komponentenschonung und eine weitere Verlustleistungsreduzierung. Optional können höhere Ströme realisiert werden.
- Der Maximalwert des Aussteuergrads bleibt auch bei der Nutzung von Redundanzmodulen bzw. beim Ausfall von Redundanzmodulen konstant. Auch der zeitliche Verlauf des Aussteuergrads bleibt nahezu unverändert. Damit tritt auch bei der Nutzung von Redundanzmodulen keine zusätzliche Belastung der elektronischen Schaltelemente der Module auf.
- Eine Verkopplung der einzelnen Arbeitspunkte des Stromrichters über die gleiche Stromrichterenergie entfällt (eine derartige Verkopplung würde auftreten, wenn für alle Arbeitspunkte die Energie in den Phasenmodulzweigen auf denselben Wert geregelt werden würde). Dadurch kann - insbesondere bei schwierigen Bedingungen, wie z. B. Module mit kleinen Energiespeichern und einer geringen maximalen Betriebsspannung, jedoch einem hohen Betriebsstrom - der Multilevelstromrichter mit weniger Modulen als bisher ausgelegt werden. Folglich können Stromrichter mit gleichbleibenden Leistungsdaten, jedoch mit weniger Modulen realisiert werden.
- Eine vereinfachte Auslegbarkeit von Multilevelstromrichtern in Bezug auf Redundanzmodule und Stromtragfähigkeit ist möglich.
- Die beschriebene Regelung des Maximalwerts des Aussteuergrads kann als eine Optimierung/Aufrüstung bei bereits bestehenden Multilevelstromrichter angewendet werden, insbesondere auch auf Bestandsanlagen.
- Durch die im Mittelwert erfolgende Senkung der Spannung des Energiespeichers der Module ergeben sich kleinere Spannungsstufen in der von dem Multilevelstromrichter erzeugten Spannung. Dadurch kann sich eine verbesserte elektromagnetische Verträglichkeit sowie eine geringere Abweichung der erzeugten Spannung von der reinen Sinusspannung (geringerer Klirrfaktor) ergeben.

Es werden folgende Merkmale des Verfahrens und der Anordnung genannt:
- Ermitteln des Maximalwerts des Aussteuergrads des Phasenmodulzweiges durch Auswertung der Spannungsverhältnisse oder alternativ durch Auswertung der Schaltzustandsverhältnisse der elektronischen Schaltelemente der Module.
- Optionale Regelung des Energiegehaltes, der Spannungsverhältnisse oder der Schaltzustandsverhältnisse des Stromrichters bzw. des Phasenmodulzweigs derart, dass im quasistationären Zustand ein Sollwert für den Maximalwert des Aussteuergrads idealerweise genau erreicht wird, wobei dieser Sollwert im Idealfall auch bei dynamischen Schwankungen nicht überschritten wird.
- Der Sollwert für den Maximalwert des Aussteuergrads kann konstant sein oder arbeitspunktspezifisch unterschiedlich. Dieser Sollwert kann beispielsweise aus einem Kennfeld entnommen oder mittels eines Polynoms berechnet werden.
- Optional kann die Regelung des Konverters auch ohne die Ermittlung von Modulspannungswerten, Phasenmodulzweigspannungswerten, Modulenergien oder Phasenmodulzweigenergien realisiert werden, was insbesondere bei neu zu entwickelnden Anlagen die Regelung wesentlich vereinfacht.

### Bezugszeichen

- 1: Multilevelstromrichter
- 5: erster Wechselspannungsanschluss
- 7: zweiter Wechselspannungsanschluss
- 9: dritter Wechselspannungsanschluss
- 10: Phasenmodulzweig
- 10a: erster Phasenmodulzweig
- 10b: zweiter Phasenmodulzweig
- 10c: dritter Phasenmodulzweig
- 10d: vierter Phasenmodulzweig
- 10e: fünfter Phasenmodulzweig
- 10f: sechster Phasenmodulzweig
- 16: erster Gleichspannungsanschluss
- 17: zweiter Gleichspannungsanschluss

- 200: Multilevelstromrichter
- 304: erster Zweiganschluss
- 306: zweiter Zweiganschluss
- 310: Modul
- 312: Drosselspule
- 400: Modul / Halbbrücken-Modul
- 410: erstes elektronisches Schaltelement
- 412: zweites elektronisches Schaltelement
- 416: Energiespeicher / Kondensator
- 418: drittes elektronisches Schaltelement
- 420: viertes elektronisches Schaltelement
- 422: erster Modulanschluss
- 425: zweiter Modulanschluss
- 500: Modul / Vollbrücken-Modul
- 525: zweiter Modulanschluss
- 710: Ermittlungseinrichtung
- 715: Maximalwertbilder
- 720: Regeleinrichtung
- 720': Regeleinrichtung
- 730: Ansteuerung
- 820: weitere Regeleinrichtung
- a(t): Aussteuergrad
- aₘₐₓ(t): Maximalwert des Aussteuergrads
- aₘₐₓs: Sollwert für den Maximalwert des Aussteuergrads
- I_{conv}: Phasenmodulzweigstrom
- T: Periodendauer
- U_{conv}: Phasenmodulzweigspannung
- U_{SM}: Energiespeicherspannung

## Patentansprüche

1. Verfahren zum Regeln eines modularen Multilevelstromrichters (1), der mindestens einen Phasenmodulzweig (10) aufweist, welcher eine Reihenschaltung von Modulen (310) aufweist, wobei diese Module jeweils einen Energiespeicher (416) und eine Leistungshalbleiterschaltung mit elektronischen Schaltelementen (410, 412) aufweisen, wobei bei dem Verfahren
- ein Aussteuergrad (a(t)) des Phasenmodulzweigs (10) ermittelt wird (710), wobei der Aussteuergrad das Verhältnis zwischen einer von dem Phasenmodulzweig (10) ausgegebenen Phasenmodulzweigspannung (U_{conv}(t)) und einer maximal ausgebbaren Phasenmodulzweigspannung (ΣU_{SM}(t)) beschreibt,
- wobei ein Programm-Code die Funktionsweise eines Maximalwertbilders (60), aufweisend einen Kondensator (C), der über eine Diode (D) durch ein Signal des Aussteuergrads (a(t)) auf einen Maximalwert des Aussteuergrads (amax(t)) aufgeladen wird, welcher durch eine Entladung des Kondensators (C) über einen Widerstand des Maximalwertbilders (60) mit der Zeit linear abfällt, zeitdiskret digital nachbildet, um den Maximalwert des Aussteuergrads (amax(t)) während einer vorgewählten Zeitspanne (T) zu ermitteln,
- wobei der Programm-Code eine zeitdiskrete Folge des Aussteuergrads auswertet, indem der Aussteuergrad (a(k)) zu einem Zeitpunkt der Folge mit dem Maximalwert des Aussteuergrads (amax(k-1)) zum vorherigen Zeitpunkt vergleicht und den aktuellen Wert für den Maximalwert (amax(k)) des Aussteuergrads mit dem aktuellen Aussteuergrad (a(k)) gleichsetzt, wenn der aktuelle Aussteuergrad (a(k)) größer ist als der Maximalwert des Aussteuergrads (amax(k-1)) zum vorherigen Zeitpunkt, und den aktuellen Wert für den Maximalwert (amax(k)) des Aussteuergrads auf einen niedrigeren Wert absenkt, wenn der aktuelle Aussteuergrad (a(k)) nicht größer ist als der Maximalwert des Aussteuergrads (amax(k-1)) zum vorherigen Zeitpunkt, wobei der niedrigere Wert als Differenz des Maximalwerts des Aussteuergrads (amax(k-1)) zum vorherigen Zeitpunkt und einem falloff-Wert gebildet wird, der die Entladung des Kondensators des Maximalwertbilders (60) über den Widerstand des Maximalwertbilders (60) simuliert, wobei k der Index der zeitdiskreten Werte ist, und
- mittels einer Regeleinrichtung (720) der Maximalwert (amax(t)) des Aussteuergrads auf einen Sollwert (aₘₐₓs(t)) für den Maximalwert des Aussteuergrads geregelt wird.

2. Verfahren nach Anspruch 1,
wobei
- der Aussteuergrad ermittelt wird
- durch Bestimmen der von dem Phasenmodulzweig (10) ausgegebenen Phasenmodulzweigspannung und der Spannungen der Energiespeicher (416) der einzelnen Module (310) des Phasenmodulzweigs (10), durch Summation der Spannungen der Energiespeicher (416) der einzelnen Module (310) des Phasenmodulzweigs (10) und anschließende Verhältnisbildung zwischen der Phasenmodulzweigspannung und der Summe der Spannungen der Energiespeicher (416) der Module (310) des Phasenmodulzweigs (10), oder
- durch Bestimmen der Anzahl der Module (310) des Phasenmodulzweigs (10), bei denen die Spannung des jeweiligen Energiespeichers (416) wirksam zur Phasenmodulzweigspannung beiträgt, und anschließende Verhältnisbildung zwischen der bestimmten Anzahl der Module (310) und der Gesamtzahl der in dem Phasenmodulzweig (10) vorhandenen Module (310).

3. Verfahren nach Anspruch 1 oder 2,
wobei
- der Maximalwert des Aussteuergrads auf den Sollwert für den Maximalwert des Aussteuergrads geregelt wird, indem bei zu hohem Maximalwert des Aussteuergrads die elektronischen Schaltelemente (410, 412) der Module (310) des Phasenmodulzweigs (10) derart angesteuert werden, dass die Energiespeicher (416) der Module (310) im Mittel auf eine höhere Spannung aufgeladen werden, wodurch der Maximalwert des Aussteuergrads sinkt, und/oder indem bei zu niedrigem Maximalwert des Aussteuergrads die elektronischen Schaltelemente (410, 412) der Module (310) des Phasenmodulzweigs (10) derart angesteuert werden, dass die Energiespeicher (416) der Module (310) im Mittel auf eine niedrigere Spannung aufgeladen werden, wodurch der Maximalwert des Aussteuergrads steigt.

4. Verfahren nach einem der vorhergehenden Ansprüche,
wobei
- der Maximalwert des Aussteuergrads auf den Sollwert für den Maximalwert des Aussteuergrads geregelt wird, indem
- der Sollwert für den Maximalwert des Aussteuergrads in eine Sollenergiemenge der Module (310) des Phasenmodulzweigs (10) oder in eine Sollsumme der Spannungen der Energiespeicher (416) der Module (310) des Phasenmodulzweigs (10) umgerechnet wird, und
- die elektronischen Schaltelemente (410, 412) der Module (310) derart angesteuert werden, dass der Phasenmodulzweig (10) auf die Sollenergiemenge oder die Sollsumme der Spannungen der Energiespeicher (416) der Module (310) aufgeladen oder entladen wird.

5. Verfahren nach einem der vorhergehenden Ansprüche,
wobei
- ein konstanter Sollwert für den Maximalwert des Aussteuergrads verwendet wird oder ein Sollwert für den Maximalwert des Aussteuergrads verwendet wird, der abhängig ist von einem aus der Phasenmodulzweigspannung (Uconv) und einem Phasenmodulzweigstrom (Iconv) gebildeten Arbeitspunkt des Phasenmodulzweigs (10).

6. Verfahren nach einem der vorhergehenden Ansprüche,
wobei
- der Phasenmodulzweig (10) überzählige Module (310) aufweist, die zum Ersetzen von während des Betriebs des Multilevelstromrichters (1) ausfallenden Modulen bestimmt sind, und diese überzähligen Module (310) beim Betrieb des Multilevelstromrichters (1) auch in Betrieb sind.

7. Verfahren nach einem der vorhergehenden Ansprüche,
wobei
- für mehrere Phasenmodulzweige (10a, 10b, 10c, 10d, 10e, 10f) des Multilevelstromrichters (1) ein gemeinsamer Maximalwert des Aussteuergrads während der vorgewählten Zeitspanne ermittelt wird, und
- mittels der Regeleinrichtung (720) der gemeinsame Maximalwert des Aussteuergrads auf einen Sollwert für den gemeinsamen Maximalwert des Aussteuergrads geregelt wird.

8. Verfahren nach einem der vorhergehenden Ansprüche,
wobei
- ein Sollwert für den Maximalwert des Aussteuergrads verwendet wird, der um einen vorgewählten Sicherheitsabstand kleiner ist als 1.

9. Anordnung mit einem modularen Multilevelstromrichter (1), der mindestens einen Phasenmodulzweig (10) aufweist, welcher eine Reihenschaltung von Modulen (310) aufweist, wobei diese Module (310) jeweils einen Energiespeicher (416) und eine Leistungshalbleiterschaltung mit elektronischen Schaltelementen (410, 412) aufweisen,
- mit einer Ermittlungseinrichtung (710), die einen Aussteuergrad des Phasenmodulzweigs (10) ermittelt, wobei der Aussteuergrad das Verhältnis zwischen der von dem Phasenmodulzweig (10) ausgegebenen Phasenmodulzweigspannung und der maximal ausgebbaren Phasenmodulzweigspannung beschreibt,
- mit einem Mittel (715), welches dazu ausgebildet ist, die Funktionsweise eines Maximalwertbilders (60), aufweisend einen Kondensator (C), der über eine Diode (D) durch ein Signal des Aussteuergrads (a(t)) auf einen Maximalwert des Aussteuergrads (amax(t)) aufgeladen wird, welcher durch eine Entladung des Kondensators (C) über einen Widerstand des Maximalwertbilders (60) mit der Zeit linear abfällt, zeitdiskret digital nachzubilden, um den Maximalwert des Aussteuergrads (amax(t)) während einer vorgewählten Zeitspanne (T) zu ermitteln, und
- mit einer Regeleinrichtung (720), die ausgestaltet ist zum Regeln des Maximalwerts des Aussteuergrads auf einen Sollwert für den Maximalwert des Aussteuergrads, wobei die Anordnung ausgestaltet ist, das Verfahren nach einem der Ansprüche 1 bis 8 auszuführen.

10. Anordnung nach Anspruch 9,
wobei
- die Ermittlungseinrichtung (710) ausgestaltet ist
- zum Bestimmen der von dem Phasenmodulzweig (10) ausgegebenen Phasenmodulzweigspannung und der Spannungen der Energiespeicher (416) der einzelnen Module (310) des Phasenmodulzweigs (10), zur Summation der Spannungen der Energiespeicher (416) der einzelnen Module (310) des Phasenmodulzweigs (10) und zur anschließenden Verhältnisbildung zwischen der Phasenmodulzweigspannung und der Summe der Spannungen der Energiespeicher (416) der Module (310) des Phasenmodulzweigs (10), oder
- zum Bestimmen der Anzahl der Module (310) des Phasenmodulzweigs (10), bei denen die Spannung des jeweiligen Energiespeichers (416) wirksam zur Phasenmodulzweigspannung beiträgt, und zur anschließenden Verhältnisbildung zwischen der bestimmten Anzahl der Module und der Gesamtzahl der in dem Phasenmodulzweig (10) vorhandenen Module (310).

11. Anordnung nach Anspruch 9 oder 10,
wobei
- die Regeleinrichtung (720) den Maximalwert des Aussteuergrads auf den Sollwert für den Maximalwert des Aussteuergrads regelt, indem bei zu hohem Maximalwert des Aussteuergrads die Regeleinrichtung (720) eine Ansteuerung der elektronischen Schaltelemente (410, 412) der Module (310) des Phasenmodulzweigs (10) veranlasst derart, dass die Energiespeicher (416) der Module (310) im Mittel auf eine höhere Spannung aufgeladen werden, wodurch der Maximalwert des Aussteuergrads sinkt, und/oder indem bei zu niedrigem Maximalwert des Aussteuergrads die Regeleinrichtung (720) eine Ansteuerung der elektronischen Schaltelemente (410, 412) der Module (310) des Phasenmodulzweigs (10) veranlasst derart, dass die Energiespeicher (416) der Module (310) im Mittel auf eine niedrigere Spannung aufgeladen werden, wodurch der Maximalwert des Aussteuergrads steigt.

12. Anordnung nach einem der Ansprüche 9 bis 11,
wobei die Regeleinrichtung (720') den Maximalwert des Aussteuergrads auf den Sollwert für den Maximalwert des Aussteuergrads regelt,
- indem die Regeleinrichtung (720') den Sollwert für den Maximalwert des Aussteuergrads in eine Sollenergiemenge der Module (310) des Phasenmodulzweigs (10) oder eine Sollsumme der Spannungen der Energiespeicher (416) der Module (310) des Phasenmodulzweigs (10) umrechnet, und
- indem die Regeleinrichtung (720') eine Ansteuerung der elektronischen Schaltelemente (410, 412) der Module (310) veranlasst derart, dass der Phasenmodulzweig (10) auf die Sollenergiemenge oder die Sollsumme der Spannungen der Energiespeicher (416) der Module (310) aufgeladen oder entladen wird.

13. Anordnung nach einem der Ansprüche 9 bis 12,
wobei
- die Regeleinrichtung (720, 720') einen konstanten Sollwert für den Maximalwert des Aussteuergrads verwendet oder einen Sollwert für den Maximalwert des Aussteuergrads verwendet, der abhängig ist von einem aus der Phasenmodulzweigspannung (Uconv) und einem Phasenmodulzweigstrom (Iconv) gebildeten Arbeitspunkt des Phasenmodulzweigs (10).

14. Anordnung nach einem der Ansprüche 9 bis 13,
wobei
- der Phasenmodulzweig (10) überzählige Module (310) aufweist, die zum Ersetzen von während des Betriebs des Multilevelstromrichters (1) ausfallenden Modulen bestimmt sind, und diese überzähligen Module (310) beim Betrieb des Multilevelstromrichters (1) auch in Betrieb sind.

15. Anordnung nach einem der Ansprüche 9 bis 14,
wobei
- der Maximalwertbilder (715) für mehrere Phasenmodulzweige (10a, 10b, 10c, 10d, 10e, 10f) des Multilevelstromrichters (1) einen gemeinsamen Maximalwert des Aussteuergrads während der vorgewählten Zeitspanne ermittelt, und
- die Regeleinrichtung (720) den gemeinsamen Maximalwert des Aussteuergrads auf einen Sollwert für den gemeinsamen Maximalwert des Aussteuergrads regelt.

16. Anordnung nach einem der Ansprüche 9 bis 15,
wobei
- der Sollwert für den Maximalwert des Aussteuergrads um einen vorgewählten Sicherheitsabstand kleiner ist als 1.

17. Anordnung nach einem der Ansprüche 9 bis 16,
wobei
- die Module (400) jeweils ein erstes elektronisches Schaltelement (410), ein zweites elektronisches Schaltelement (412) und den Energiespeicher (416) aufweisen, wobei das erste elektronische Schaltelement (410), das zweite elektronische Schaltelement (412) und der Energiespeicher (416) in einer Halbbrückenschaltung angeordnet sind, oder
- die Module (500) jeweils ein erstes elektronisches Schaltelement (410), ein zweites elektronisches Schaltelement (412), ein drittes elektronisches Schaltelement (418), ein viertes elektronisches Schaltelement (420) und den Energiespeicher (416) aufweisen, wobei das erste elektronische Schaltelement (410), das zweite elektronische Schaltelement (412), das dritte elektronische Schaltelement (418), das vierte elektronische Schaltelement (420) und der Energiespeicher (416) in einer Vollbrückenschaltung angeordnet sind.

## Claims

1. A method for controlling a modular multilevel converter (1) which has at least one phase module branch (10) which has a series circuit of modules (310), wherein these modules each have an energy storage (416) and a power semiconductor circuit with electronic switching elements (410, 412), wherein, in the method,
- a modulation degree (a(t)) of the phase module branch (10) is determined (710), wherein the modulation degree describes the ratio between a phase module branch voltage (U_{conv}(t)) output by the phase module branch (10) and a maximum outputable phase module branch voltage (ΣU_{SM}(t)),
- wherein a program code reproduces digitally, in a time-discrete manner, the functionality of a maximum value former (60) having a capacitor (C) which is charged via a diode (D) by a signal of the modulation degree (a(t)) to a maximum value of the modulation degree (amax(t)) which decreases linearly over time through a discharge of the capacitor (C) via a resistor of the maximum value former (60) in order to determine the maximum value of the modulation degree (amax(t)) during a preselected time period (T),
- wherein the program code evaluates a time-discrete sequence of the modulation degree by comparing the modulation degree (a(k)) at a time of the sequence with the maximum value of the modulation degree (amax(k-1)) at the previous time and equating the current value for the maximum value (amax(k)) of the modulation degree with the current modulation degree (a(k)) when the current modulation degree (a(k)) is greater than the maximum value of the modulation degree (amax(k-1)) at the previous time and lowering the current value for the maximum value (amax(k)) of the modulation degree to a lower value when the current modulation degree (a(k)) is not greater than the maximum value of the modulation degree (amax(k-1)) at the previous time, wherein the lower value is formed as a difference of the maximum value of the modulation degree (amax(k-1)) at the previous time and a falloff value which simulates the discharge of the capacitor of the maximum value former (60) via the resistor of the maximum value former (60), wherein k is the index of the time-discrete values and
- the maximum value (amax(t)) of the modulation degree is controlled, by means of a controlling apparatus (720), to a desired value (aₘₐₓs(t)) for the maximum value of the modulation degree.

2. The method according to claim 1, wherein
- the modulation degree is determined
- by determining the phase module branch voltage output by the phase module branch (10) and the voltages of the energy storages (416) of the individual modules (310) of the phase module branch (10) by summing the voltages of the energy storages (416) of the individual modules (310) of the phase module branch (10) and subsequently forming a ratio between the phase module branch voltage and the sum of the voltages of the energy storages (416) of the modules (310) of the phase module branch (10) or
- by determining the number of the modules (310) of the phase module branch (10) at which the voltage of the respective energy storage (416) contributes effectively to the phase module branch voltage and subsequently forming a ratio between the determined number of the modules (310) and the total number of the modules (310) present in the phase module branch (10).

3. The method according to claim 1 or 2, wherein
- the maximum value of the modulation degree is controlled to the desired value for the maximum value of the modulation degree by actuating, when the maximum value of the modulation degree is too high, the electronic switching elements (410, 412) of the modules (310) of the phase module branch (10) such that the energy storages (416) of the modules (310) are charged on average to a higher voltage, whereby the maximum value of the modulation degree falls, and/or actuating, when the maximum value of the modulation degree is too low, the electronic switching elements (410, 412) of the modules (310) of the phase module branch (10) such that the energy storages (416) of the modules (310) are charged on average to a lower voltage, whereby the maximum value of the modulation degree rises.

4. The method according to any one of the preceding claims, wherein
- the maximum value of the modulation degree is controlled to the desired value for the maximum value of the modulation degree in that
- the desired value for the maximum value of the modulation degree is converted into a desired energy quantity of the modules (310) of the phase module branch (10) or into a desired sum of the voltages of the energy storages (416) of the modules (310) of the phase module branch (10) and
- the electronic switching elements (410, 412) of the modules (310) are actuated such that the phase module branch (10) is charged or discharged to the desired energy quantity or the desired sum of the voltages of the energy storages (416) of the modules (310).

5. The method according to any one of the preceding claims, wherein
- a constant desired value for the maximum value of the modulation degree is used or a desired value for the maximum value of the modulation degree is used which is dependent upon a working point of the phase module branch (10) formed from the phase module branch voltage (Uconv) and a phase module branch current (Iconv).

6. The method according to any one of the preceding claims, wherein
- the phase module branch (10) has excess modules (310) which are intended for replacing modules which fail during operation of the multilevel converter (1) and these excess modules (310) are also in operation during operation of the multilevel converter (1).

7. The method according to any one of the preceding claims, wherein
- for a plurality of phase module branches (10a, 10b, 10c, 10d, 10e, 10f) of the multilevel converter (1), a common maximum value of the modulation degree is determined during the preselected time period and
- the common maximum value of the modulation degree is controlled, by means of the controlling apparatus (720), to a desired value for the common maximum value of the modulation degree.

8. The method according to any one of the preceding claims, wherein
- a desired value is used for the maximum value of the modulation degree, which is smaller than 1 by a preselected safety distance.

9. An arrangement with a modular multilevel converter (1) which has at least one phase module branch (10) which has a series circuit of modules (310), wherein these modules (310) each have an energy storage (416) and a power semiconductor circuit with electronic switching elements (410, 412),
- with a determining apparatus (710) which determines a modulation degree of the phase module branch (10), wherein the modulation degree describes the ratio between the phase module branch voltage output by the phase module branch (10) and the maximum outputable phase module branch voltage,
- with a means (715) which is configured to reproduce digitally, in a time-discrete manner, the functionality of a maximum value former (60) having a capacitor (C) which is charged via a diode (D) by a signal of the modulation degree (a(t)) to a maximum value of the modulation degree (amax(t)), which decreases linearly over time through a discharge of the capacitor (C) via a resistor of the maximum value former (60) in order to determine the maximum value of the modulation degree (amax(t)) during a preselected time period (T)
and
- with a control apparatus (720) which is configured to control the maximum value of the modulation degree to a desired value for the maximum value of the modulation degree, wherein the arrangement is configured to perform the method according to any of claims 1 to 8.

10. The arrangement according to claim 9, wherein
- the determining apparatus (710) is configured
- for determining the phase module branch voltage output by the phase module branch (10) and the voltages of the energy storages (416) of the individual modules (310) of the phase module branch (10) for summing the voltages of the energy storages (416) of the individual modules (310) of the phase module branch (10) and for subsequently forming a ratio between the phase module branch voltage and the sum of the voltages of the energy storages (416) of the modules (310) of the phase module branch (10) or
- for determining the number of the modules (310) of the phase module branch (10) at which the voltage of the respective energy storage (416) contributes effectively to the phase module branch voltage and for subsequently forming a ratio between the determined number of the modules and the total number of the modules (310) present in the phase module branch (10).

11. The arrangement according to claim 9 or 10, wherein
- the control apparatus (720) controls the maximum value of the modulation degree to the desired value for the maximum value of the modulation degree in that, when the maximum value of the modulation degree is too high, the control apparatus (720) causes an actuation of the electronic switching elements (410, 412) of the modules (310) of the phase module branch (10) such that the energy storages (416) of the modules (310) are charged on average to a higher voltage, whereby the maximum value of the modulation degree falls, and/or in that, when the maximum value of the modulation degree is too low, the control apparatus (720) causes an actuation of the electronic switching elements (410, 412) of the modules (310) of the phase module branch (10) such that the energy storages (416) of the modules (310) are charged on average to a lower voltage, whereby the maximum value of the modulation degree rises.

12. The arrangement according to any one of claims 9 to 11, wherein
the control apparatus (720') controls the maximum value of the modulation degree to the desired value for the maximum value of the modulation degree,
- in that the control apparatus (720') converts the desired value for the maximum value of the modulation degree into a desired energy quantity of the modules (310) of the phase module branch (10) or a desired sum of the voltages of the energy storages (416) of the modules (310) of the phase module branch (10) and
- in that the control apparatus (720') causes an actuation of the electronic switching elements (410, 412) of the modules (310) such that the phase module branch (10) is charged or discharged to the desired energy quantity or the desired sum of the voltages of the energy storages (416) of the modules (310).

13. The arrangement according to any one of claims 9 to 12, wherein
- the control apparatus (720, 720') uses a constant desired value for the maximum value of the modulation degree or uses a desired value for the maximum value of the modulation degree which is dependent upon a working point of the phase module branch (10) formed from the phase module branch voltage (Uconv) and a phase module branch current (Iconv).

14. The arrangement according to any one of claims 9 to 13, wherein
- the phase module branch (10) has excess modules (310) which are intended for replacing modules which fail during operation of the multilevel converter (1) and these excess modules (310) are also in operation during operation of the multilevel converter (1).

15. The arrangement according to any one of claims 9 to 14, wherein
- the maximum value former (715) for a plurality of phase module branches (10a, 10b, 10c, 10d, 10e, 10f) of the multilevel converter (1) determines a common maximum value of the modulation degree during the preselected time period and
- the control apparatus (720) controls the common maximum value of the modulation degree to a desired value for the common maximum value of the modulation degree.

16. The arrangement according to any one of claims 9 to 15, wherein
- the desired value for the maximum value of the modulation degree is smaller than 1 by a preselected safety distance.

17. The arrangement according to any one of claims 9 to 16, wherein
- the modules (400) each have a first electronic switching element (410), a second electronic switching element (412) and the energy storage (416), wherein the first electronic switching element (410), the second electronic switching element (412) and the energy storage (416) are arranged in a half-bridge circuit or
- the modules (500) each have a first electronic switching element (410), a second electronic switching element (412), a third electronic switching element (418), a fourth electronic switching element (420) and the energy storage (416), wherein the first electronic switching element (410), the second electronic switching element (412), the third electronic switching element (418), the fourth electronic switching element (420) and the energy storage (416) are arranged in a full-bridge circuit.

## Revendications

1. Procédé de régulation d'un convertisseur de puissance modulaire à niveaux multiples (1), qui présente au moins une branche de module de phase (10), laquelle présente un montage en série de modules (310), dans lequel ces modules présentent chacun un accumulateur d'énergie (416) et un circuit à semi-conducteurs de puissance avec des éléments de commutation électroniques (410, 412), dans lequel, dans le procédé :
- un degré de modulation (a(t)) de la branche de module de phase (10) est déterminé (710), dans lequel le degré de modulation décrit le rapport entre une tension de branche de module de phase (U_{conv}(t)) délivrée par la branche de module de phase (10) et une tension de branche de module de phase maximale pouvant être délivrée (ΣU_{SM}(t)),
- dans lequel un code de programme reproduit numériquement de manière discrète dans le temps le fonctionnement d'un générateur de valeur maximale (60), présentant un condensateur (C), qui est chargé à travers une diode (D) par un signal du degré de modulation (a(t)) à une valeur maximale du degré de modulation (amax(t)), laquelle décroît linéairement dans le temps sous l'effet d'une décharge du condensateur (C) à travers une résistance du générateur de valeur maximale (60), afin de déterminer la valeur maximale du degré de modulation (amax(t)) pendant un laps de temps présélectionné (T),
- dans lequel le code de programme évalue une suite discrète dans le temps du degré de modulation, en comparant le degré de modulation (a(k)) à un instant de la suite avec la valeur maximale du degré de modulation (amax(k-1)) à l'instant précédent et en fixant la valeur actuelle pour la valeur maximale (amax(k)) du degré de modulation égale au degré de modulation actuel (a(k)), si le degré de modulation actuel (a(k)) est supérieur à la valeur maximale du degré de modulation (amax(k-1)) à l'instant précédent, et en abaissant la valeur actuelle pour la valeur maximale (amax(k)) du degré de modulation à une valeur inférieure, si le degré de modulation actuel (a(k)) n'est pas supérieur à la valeur maximale du degré de modulation (amax(k-1)) à l'instant précédent, dans lequel la valeur inférieure est formée en tant que différence de la valeur maximale du degré de modulation (amax(k-1)) à l'instant précédent et d'une valeur de décroissance qui simule la décharge du condensateur du générateur de valeur maximale (60) à travers la résistance du générateur de valeur maximale (60), dans lequel k est l'indice des valeurs discrètes dans le temps, et
- au moyen d'un dispositif de régulation (720), la valeur maximale (amax(t)) du degré de modulation est régulée à une valeur de consigne (aₘₐₓs(t)) pour la valeur maximale du degré de modulation.

2. Procédé selon la revendication 1, dans lequel :
- le degré de modulation est déterminé
- en déterminant la tension de branche de module de phase délivrée par la branche de module de phase (10) et les tensions des accumulateurs d'énergie (416) des différents modules (310) de la branche de module de phase (10), en sommant les tensions des accumulateurs d'énergie (416) des différents modules (310) de la branche de module de phase (10) et en établissant ensuite le rapport entre la tension de branche de module de phase et la somme des tensions des accumulateurs d'énergie (416) des modules (310) de la branche de module de phase (10), ou
- en déterminant le nombre des modules (310) de la branche de module de phase (10), pour lesquels la tension de l'accumulateur d'énergie respectif (416) contribue activement à la tension de branche de module de phase, et en établissant ensuite le rapport entre le nombre déterminé des modules (310) et le nombre total des modules (310) présents dans la branche de module de phase (10).

3. Procédé selon la revendication 1 ou 2, dans lequel :
- la valeur maximale du degré de modulation est régulée à la valeur de consigne pour la valeur maximale du degré de modulation, en commandant, en cas de valeur maximale du degré de modulation trop élevée, les éléments de commutation électroniques (410, 412) des modules (310) de la branche de module de phase (10) de telle sorte que les accumulateurs d'énergie (416) des modules (310) soient chargés en moyenne à une tension plus élevée, ce qui fait baisser la valeur maximale du degré de modulation, et/ou en commandant, en cas de valeur maximale du degré de modulation trop faible, les éléments de commutation électroniques (410, 412) des modules (310) de la branche de module de phase (10) de sorte que les accumulateurs d'énergie (416) des modules (310) soient chargés en moyenne à une tension plus faible, ce qui fait augmenter la valeur maximale du degré de modulation.

4. Procédé selon l'une quelconque des revendications précédentes, dans lequel :
- la valeur maximale du degré de modulation est régulée à la valeur de consigne pour la valeur maximale du degré de modulation, par le fait que
- la valeur de consigne pour la valeur maximale du degré de modulation est convertie en une quantité d'énergie de consigne des modules (310) de la branche de module de phase (10) ou en une somme de consigne des tensions des accumulateurs d'énergie (416) des modules (310) de la branche de module de phase (10), et
- les éléments de commutation électroniques (410, 412) des modules (310) sont commandés de sorte que la branche de module de phase (10) soit chargée ou déchargée à la quantité d'énergie de consigne ou à la somme de consigne des tensions des accumulateurs d'énergie (416) des modules (310).

5. Procédé selon l'une quelconque des revendications précédentes, dans lequel :
- une valeur de consigne constante pour la valeur maximale du degré de modulation est utilisée ou une valeur de consigne pour la valeur maximale du degré de modulation est utilisée, laquelle est dépendante d'un point de fonctionnement de la branche de module de phase (10) formé à partir de la tension de branche de module de phase (Uconv) et d'un courant de branche de module de phase (Iconv).

6. Procédé selon l'une quelconque des revendications précédentes, dans lequel :
- la branche de module de phase (10) présente des modules excédentaires (310), qui sont destinés à remplacer des modules défaillants pendant le fonctionnement du convertisseur de puissance à niveaux multiples (1), et ces modules excédentaires (310) sont également en fonctionnement lors du fonctionnement du convertisseur de puissance à niveaux multiples (1).

7. Procédé selon l'une quelconque des revendications précédentes, dans lequel :
- pour plusieurs branches de module de phase (10a, 10b, 10c, 10d, 10e, 10f) du convertisseur de puissance à niveaux multiples (1), une valeur maximale commune du degré de modulation est déterminée pendant le laps de temps présélectionné, et
- au moyen du dispositif de régulation (720), la valeur maximale commune du degré de modulation est régulée à une valeur de consigne pour la valeur maximale commune du degré de modulation.

8. Procédé selon l'une quelconque des revendications précédentes, dans lequel :
- une valeur de consigne pour la valeur maximale du degré de modulation est utilisée, laquelle est inférieure à 1 d'une marge de sécurité présélectionnée.

9. Agencement avec un convertisseur de puissance modulaire à niveaux multiples (1), qui présente au moins une branche de module de phase (10), laquelle présente un montage en série de modules (310), dans lequel ces modules (310) présentent chacun un accumulateur d'énergie (416) et un circuit à semi-conducteurs de puissance avec des éléments de commutation électroniques (410, 412),
- avec un dispositif de détermination (710), qui détermine un degré de modulation de la branche de module de phase (10), dans lequel le degré de modulation décrit le rapport entre la tension de branche de module de phase délivrée par la branche de module de phase (10) et la tension de branche de module de phase maximale pouvant être délivrée,
- avec un moyen (715), qui est conçu pour reproduire numériquement de manière discrète dans le temps le fonctionnement d'un générateur de valeur maximale (60), présentant un condensateur (C), qui est chargé à travers une diode (D) par un signal du degré de modulation (a(t)) à une valeur maximale du degré de modulation (amax(t)), laquelle décroît linéairement dans le temps sous l'effet d'une décharge du condensateur (C) à travers une résistance du générateur de valeur maximale (60), afin de déterminer la valeur maximale du degré de modulation (amax(t)) pendant un laps de temps présélectionné (T),
et
- avec un dispositif de régulation (720), qui est conçu pour réguler la valeur maximale du degré de modulation à une valeur de consigne pour la valeur maximale du degré de modulation, dans lequel l'agencement est conçu pour exécuter le procédé selon l'une quelconque des revendications 1 à 8.

10. Agencement selon la revendication 9, dans lequel :
- le dispositif de détermination (710) est conçu
- pour déterminer la tension de branche de module de phase délivrée par la branche de module de phase (10) et les tensions des accumulateurs d'énergie (416) des différents modules (310) de la branche de module de phase (10), pour sommer les tensions des accumulateurs d'énergie (416) des différents modules (310) de la branche de module de phase (10) et pour établir ensuite le rapport entre la tension de branche de module de phase et la somme des tensions des accumulateurs d'énergie (416) des modules (310) de la branche de module de phase (10), ou
- pour déterminer le nombre des modules (310) de la branche de module de phase (10), pour lesquels la tension de l'accumulateur d'énergie respectif (416) contribue activement à la tension de branche de module de phase, et pour établir ensuite le rapport entre le nombre déterminé des modules et le nombre total des modules (310) présents dans la branche de module de phase (10).

11. Agencement selon la revendication 9 ou 10, dans lequel :
- le dispositif de régulation (720) régule la valeur maximale du degré de modulation à la valeur de consigne pour la valeur maximale du degré de modulation, en ce que, en cas de valeur maximale du degré de modulation trop élevée, le dispositif de régulation (720) déclenche une commande des éléments de commutation électroniques (410, 412) des modules (310) de la branche de module de phase (10) de telle sorte que les accumulateurs d'énergie (416) des modules (310) soient chargés en moyenne à une tension plus élevée, ce qui fait baisser la valeur maximale du degré de modulation, et/ou en ce que, en cas de valeur maximale du degré de modulation trop faible, le dispositif de régulation (720) déclenche une commande des éléments de commutation électroniques (410, 412) des modules (310) de la branche de module de phase (10) de telle sorte que les accumulateurs d'énergie (416) des modules (310) soient chargés en moyenne à une tension plus faible, ce qui fait augmenter la valeur maximale du degré de modulation.

12. Agencement selon l'une quelconque des revendications 9 à 11, dans lequel :
- le dispositif de régulation (720') régule la valeur maximale du degré de modulation à la valeur de consigne pour la valeur maximale du degré de modulation,
- en ce que le dispositif de régulation (720') convertit la valeur de consigne pour la valeur maximale du degré de modulation en une quantité d'énergie de consigne des modules (310) de la branche de module de phase (10) ou en une somme de consigne des tensions des accumulateurs d'énergie (416) des modules (310) de la branche de module de phase (10), et
- en ce que le dispositif de régulation (720') déclenche une commande des éléments de commutation électroniques (410, 412) des modules (310) de telle sorte que la branche de module de phase (10) soit chargée ou déchargée à la quantité d'énergie de consigne ou à la somme de consigne des tensions des accumulateurs d'énergie (416) des modules (310).

13. Agencement selon l'une quelconque des revendications 9 à 12, dans lequel :
- le dispositif de régulation (720, 720') utilise une valeur de consigne constante pour la valeur maximale du degré de modulation ou utilise une valeur de consigne pour la valeur maximale du degré de modulation, laquelle est dépendante d'un point de fonctionnement de la branche de module de phase (10) formé à partir de la tension de branche de module de phase (Uconv) et d'un courant de branche de module de phase (Iconv).

14. Agencement selon l'une quelconque des revendications 9 à 13, dans lequel :
- la branche de module de phase (10) présente des modules excédentaires (310), qui sont destinés à remplacer des modules défaillants pendant le fonctionnement du convertisseur de puissance à niveaux multiples (1), et ces modules excédentaires (310) sont également en fonctionnement lors du fonctionnement du convertisseur de puissance à niveaux multiples (1).

15. Agencement selon l'une quelconque des revendications 9 à 14, dans lequel :
- le générateur de valeur maximale (715) détermine pour plusieurs branches de module de phase (10a, 10b, 10c, 10d, 10e, 10f) du convertisseur de puissance à niveaux multiples (1) une valeur maximale commune du degré de modulation pendant
le laps de temps présélectionné, et
- le dispositif de régulation (720) régule la valeur maximale commune du degré de modulation à une valeur de consigne pour la valeur maximale commune du degré de modulation.

16. Agencement selon l'une quelconque des revendications 9 à 15, dans lequel :
- la valeur de consigne pour la valeur maximale du degré de modulation est inférieure à 1 d'une marge de sécurité présélectionnée.

17. Agencement selon l'une quelconque des revendications 9 à 16, dans lequel :
- les modules (400) présentent chacun un premier élément de commutation électronique (410), un deuxième élément de commutation électronique (412) et l'accumulateur d'énergie (416), dans lequel le premier élément de commutation électronique (410), le deuxième élément de commutation électronique (412) et l'accumulateur d'énergie (416) sont disposés dans un circuit en demi-pont, ou
- les modules (500) présentent chacun un premier élément de commutation électronique (410), un deuxième élément de commutation électronique (412), un troisième élément de commutation électronique (418), un quatrième élément de commutation électronique (420) et l'accumulateur d'énergie (416), dans lequel le premier élément de commutation électronique (410), le deuxième élément de commutation électronique (412), le troisième élément de commutation électronique (418), le quatrième élément de commutation électronique (420) et l'accumulateur d'énergie (416) sont disposés dans un circuit en pont complet.
